(19) Europäisches Patentamt
European Patent Office
Office européen des brevets

(11) **EP 4 694 109 A1**

(12) **EUROPEAN PATENT APPLICATION**
published in accordance with Art. 153(4) EPC

(43) Date of publication:
**11.02.2026 Bulletin 2026/07**

(21) Application number: **24853828.2**

(22) Date of filing: **14.08.2024**

(51) International Patent Classification (IPC):
***H04N 9/64*** *(2023.01)* ***G06T 5/00*** *(2024.01)*
***H04N 11/24*** *(2006.01)*

(52) Cooperative Patent Classification (CPC):
**G06T 5/00; H04N 9/64; H04N 11/24**

(86) International application number:
**PCT/CN2024/112172**

(87) International publication number:
**WO 2025/036421 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.08.2023 CN 202311034406**

(71) Applicant: **Huawei Technologies Co., Ltd.**
**Shenzhen, Guangdong 518129 (CN)**

(72) Inventors:
- **XU, Weiwei**
  **Shenzhen, Guangdong 518129 (CN)**
- **YU, Quanhe**
  **Shenzhen, Guangdong 518129 (CN)**
- **WANG, Yichuan**
  **Shenzhen, Guangdong 518129 (CN)**

(74) Representative: **Grünecker Patent- und Rechtsanwälte**
**PartG mbB**
**Leopoldstraße 4**
**80802 München (DE)**

# (54) IMAGE DISPLAY METHOD, AND APPARATUS

(57) This application provides an image display method and apparatus. The method includes: obtaining a double-layer bitstream including first encoded data, second encoded data, and metadata, where the first encoded data represents a base image, and the second encoded data represents an enhancement image; obtaining the base image and the enhancement image based on the first encoded data and the second encoded data; merging the base image and the enhancement image, to obtain a composite image; performing tone mapping on the composite image based on first tone mapping information, to obtain a first target image, where the first tone mapping information is determined based on the metadata and first display information of an electronic device; and displaying the first target image. In this way, an image display method applicable to a double-layer bitstream is provided, and tone mapping information applicable to a current display capability of the electronic device can be determined based on the display information of the electronic device, to obtain a target image that meets a current display requirement of the electronic device. This improves display effect of the electronic device, and improves visual experience of a user.

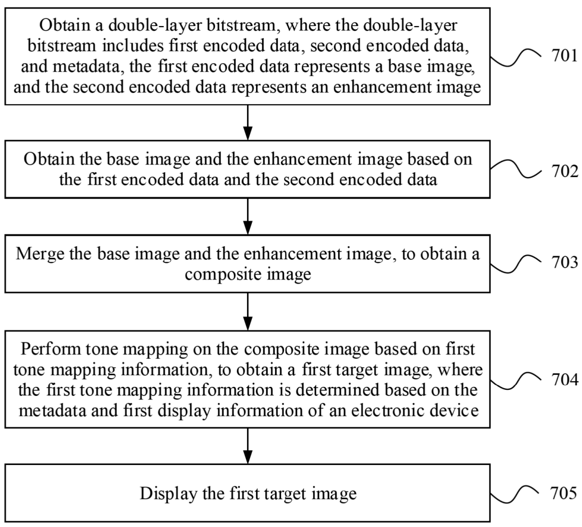


FIG. 7

EP 4 694 109 A1

## Description

This application claims priority to Chinese Patent Application No. 202311034406.7, filed with the China National Intellectual Property Administration on August 15, 2023 and entitled "IMAGE PROCESSING METHOD AND APPARATUS", which is incorporated herein by reference in its entirety.

## TECHNICAL FIELD

This application relates to image processing technologies, and in particular, to an image display method and apparatus.

## BACKGROUND

Currently, an image processing procedure generally includes front-end processing (for example, including image generation and encoding), intermediate processing (for example, including transcoding and re-encoding), and back-end processing (for example, including decoding and image display). The image processing procedure is mainly for a single-layer bitstream, for example, a bitstream obtained based on a standard dynamic range (standard dynamic range, SDR) image. However, for a high dynamic range (High Dynamic Range, HDR) image, a processing method for a single-layer bitstream is inapplicable.

## SUMMARY

This application provides an image display method and apparatus that are applicable to a scene of displaying an image of a double-layer bitstream.

According to a first aspect, this application provides an image display method. The method includes: An electronic device obtains a double-layer bitstream, where the double-layer bitstream includes first encoded data, second encoded data, and metadata, the first encoded data represents a base image, and the second encoded data represents an enhancement image. The electronic device obtains the base image and the enhancement image based on the first encoded data and the second encoded data. The electronic device merges the base image and the enhancement image, to obtain a composite image. The electronic device performs tone mapping on the composite image based on first tone mapping information, to obtain a first target image, where the first tone mapping information is determined based on the metadata and first display information of an electronic device. The electronic device displays the first target image. In this way, the base image and the enhancement image are merged after decoding, to obtain a single composite image to adapt to a single buffer. This resolves a problem that a processing method for a single-layer bitstream is not applicable. After the double-layer bitstream is decoded, the double-layer bitstream usually includes two image buffers: the base image and the enhancement image. In this application, decoding, processing, and display of the double-layer bitstream are separated from each other. The two images obtained through decoding are merged into one composite image, so that the two image buffers are combined into one buffer. Therefore, from decoding to image obtaining and then to display, interfaces between existing modules can be reused. During display, tone mapping may be performed based on display-related information transferred in the metadata, to finally obtain correct processing effect. This prevents an application program from being redesigned due to unavailability of original interfaces. In addition, in this application, corresponding tone mapping information may be determined based on the metadata and current display information of the electronic device, to generate a target image that adapts to a current display capability of the electronic device. This improves display effect of the electronic device, and improves user visual experience.

In a possible implementation, the display information includes at least one of the following: display information of a display screen and display environment information. In this way, the electronic device may determine a corresponding tone mapping parameter based on a current display capability of the display screen and an ambient environment of the display screen, so that the generated target image can adapt to the current display capability of the display screen and the ambient environment.

In a possible implementation, the display information of the display screen includes at least one of the following: a luminance range of the display screen and a size of the display screen. In this way, the electronic device may determine corresponding tone mapping information based on the display information such as the luminance range and the size of the display screen, so that the generated target image can adapt to the current display capability of the display screen and the ambient environment.

In a possible implementation, the display environment information includes at least one of the following: luminance of an ambient environment of the electronic device and a color temperature of the ambient environment. In this way, the electronic device may determine corresponding tone mapping information based on parameters such as the luminance and the color temperature of the environment, so that the generated target image can adapt to the current display capability of the display screen and the ambient environment.

In a possible implementation, the metadata includes at least one piece of tone mapping information and at least one piece of preset display information corresponding to the at least one piece of tone mapping information, and before the performing tone mapping on the composite image based on the first tone mapping information, the method further includes: determining, based on display information of the electronic device, target preset display information that matches the display information of the electronic device; and adjusting, based on a difference value between the target preset display information and the display information of the electronic device, tone mapping information corresponding to the target preset display information, to obtain the first tone mapping information. In this way, the electronic device may obtain tone mapping information corresponding to the current display information of the electronic device based on the tone mapping information carried in the metadata, so that the generated target image can adapt to the current display capability of the electronic device. This improves display effect.

In a possible implementation, the metadata includes at least one piece of tone mapping information and at least one piece of preset display information corresponding to the at least one piece of tone mapping information, and before the performing tone mapping on the composite image based on the first tone mapping information, the method further includes: adjusting the at least one piece of tone mapping information based on a difference value between display information of the electronic device and the at least one piece of preset display information, to obtain the first tone mapping information. In this way, the electronic device may obtain tone mapping information corresponding to the current display information of the electronic device based on the tone mapping information carried in the metadata, so that the generated target image can adapt to the current display capability of the electronic device. This improves display effect.

In a possible implementation, the method further includes: performing tone mapping on the composite image based on second tone mapping information, to obtain a second target image, where the second tone mapping information is determined based on the metadata and second display information of the electronic device; and displaying the second target image. In this way, when the display information of the electronic device dynamically changes, the electronic device may dynamically adjust the tone mapping information based on the changed display information, so that the generated target image can adapt to the current display capability of the electronic device.

In a possible implementation, before the merging the base image and the enhancement image, the method further includes: determining a range of an allowed tone distortion degree. In this way, the electronic device can execute corresponding image display procedures based on different scenario requirements, to improve scenario adaptability.

In a possible implementation, the merging the base image and the enhancement image includes: when the range of the allowed tone distortion degree is within a preset range, merging the base image and the enhancement image, to obtain the composite image.

According to a second aspect, this application provides an image display apparatus including: an obtaining module, configured to obtain a double-layer bitstream, where the double-layer bitstream includes first encoded data, second encoded data, and metadata, the first encoded data represents a base image, and the second encoded data represents an enhancement image; a decoding module, configured to obtain the base image and the enhancement image based on the first encoded data and the second encoded data; a composition module, configured to merge the base image and the enhancement image, to obtain a composite image; a tone mapping module, configured to perform tone mapping on the composite image based on first tone mapping information, to obtain a first target image, where the first tone mapping information is determined based on the metadata and first display information of an electronic device; and a display module, configured to display the first target image.

In a possible implementation, the display information of the electronic device includes at least one of the following: display information of a display screen and display environment information.

In a possible implementation, the display information of the display screen includes at least one of the following: a luminance range of the display screen and a size of the display screen.

In a possible implementation, the display environment information includes at least one of the following: luminance of an ambient environment of the electronic device and a color temperature of the ambient environment.

In a possible implementation, the metadata includes at least one piece of tone mapping information and at least one piece of preset display information corresponding to the at least one piece of tone mapping information, and the tone mapping module is specifically configured to: determine, based on display information of the electronic device, target preset display information that matches the display information of the electronic device; and adjust, based on a difference value between the target preset display information and the display information of the electronic device, tone mapping information corresponding to the target preset display information, to obtain the first tone mapping information.

In a possible implementation, the metadata includes at least one piece of tone mapping information and at least one piece of preset display information corresponding to the at least one piece of tone mapping information, and the tone mapping module is specifically configured to adjust the at least one piece of tone mapping information based on a difference value between display information of the electronic device and the at least one piece of preset display information, to obtain the first tone mapping information.

In a possible implementation, the tone mapping module is further configured to perform tone mapping on the composite image based on second tone mapping information, to obtain a second target image, where the second tone mapping information is determined based on the metadata and second display information of the electronic device. The display module is further configured to display the second target image.

In a possible implementation, the apparatus further includes a determining module, configured to determine a range of an allowed tone distortion degree.

In a possible implementation, the composition module is further configured to: when the range of the allowed tone distortion degree is within a preset range, merge the base image and the enhancement image, to obtain the composite image.

According to a third aspect, this application provides an encoding method. The method includes: obtaining a base image and an enhancement image; encoding the base image and the enhancement image, to obtain first encoded data and second encoded data; and outputting a double-layer bitstream, where the double-layer bitstream includes the first encoded data, the second encoded data, and metadata.

According to a fourth aspect, this application provides an electronic device including: one or more processors; and a memory, configured to store one or more programs. When the one or more programs are executed by the one or more processors, the one or more processors are enabled to implement the method in any implementation of the first aspect.

According to a fifth aspect, this application provides a computer-readable storage medium including a computer program. When the computer program is executed on a computer, the computer is enabled to perform the method in any implementation of the first aspect.

According to a sixth aspect, this application provides a computer program. When the computer program is executed by a computer, the method in any implementation of the first aspect is performed.

According to a seventh aspect, this application further provides a computer program product. The computer program product includes computer program code. When the computer program code is run on a computer, the computer is enabled to perform operations and/or processing performed by the electronic device in any one of the foregoing method embodiments.

According to an eighth aspect, an embodiment of this application provides a bitstream structure. The bitstream includes encoded data of a base image, encoded data of an enhancement image, and metadata, and the metadata includes tone mapping information.

## BRIEF DESCRIPTION OF DRAWINGS

FIG. 1 is a block diagram of an encoding/decoding system to which an embodiment of this application is applied;

FIG. 2A illustrates a block diagram of a content providing system;

FIG. 2B illustrates a structure of a terminal device;

FIG. 3A illustrates a working flowchart of a streaming media system;

FIG. 3B illustrates an architecture of a streaming media system;

FIG. 4A illustrates an architecture of an image processing system;

FIG. 4B illustrates an architecture of an image processing system;

FIG. 5 illustrates dynamic mapping from a high dynamic range of the real world to a low dynamic range of a display device;

FIG. 6 illustrates a structure of a receive end;

FIG. 7 illustrates a flowchart of an image display method;

FIG. 8A and FIG. 8B illustrate a flowchart of an image display method;

FIG. 9 illustrates a flowchart of tone mapping;

FIG. 10 illustrates a flowchart of an image display method; and

FIG. 11 illustrates a structure of an image display apparatus.

## DESCRIPTION OF EMBODIMENTS

To make objectives, technical solutions, and advantages of this application clearer, the following clearly and completely describes the technical solutions in this application with reference to accompanying drawings in this application. It is clear that the described embodiments are a part rather than all of embodiments of this application. All other embodiments obtained by a person of ordinary skill in the art according to embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

It should be understood that in this application, "at least one piece (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

The following describes related technologies in this application.

To resolve the foregoing technical problems, this application provides an image display method and apparatus. The following describes the technical solutions of this application.

FIG. 1 is a block diagram of an encoding/decoding system to which an embodiment of this application is applied. A video encoder 20 (or an encoder 20 for short) and a video decoder 30 (or a decoder 30 for short) of a video encoding/decoding system 10 represent devices that may be configured to perform techniques based on various examples described in this application.

As shown in FIG. 1, the encoding/decoding system 10 includes a source device 12. The source device 12 is configured to provide encoded data 21 such as an encoded image to a destination device 14 for decoding the encoded data.

The source device 12 includes the encoder 20, and may optionally include an image source 16, an image preprocessor (or a preprocessing unit) 18, and a communication interface or communication unit 22.

The image source 16 may include or may be any type of image capturing device configured to capture an image in the real world, and/or any type of image generation device, for example, a computer graphics processor configured to generate a computer animated image, or any type of device configured to obtain and/or provide an image in the real world, a computer generated image (for example, content on a screen, a virtual reality (virtual reality, VR) image, and/or any combination thereof (for example, an augmented reality (augmented reality, AR) image)). The image source may be any type of memory or storage storing any of the foregoing images.

To distinguish processing performed by the preprocessor 18 or the preprocessing unit 18, an image or image data 17 may also be referred to as a raw image or raw image data 17.

Preprocessor 18 is configured to receive the (raw) image data 17 and to perform preprocessing on the image data 17, to obtain a preprocessed image 19 or preprocessed image data 19. For example, preprocessing performed by the preprocessor 18 may include trimming, color format conversion (for example, from RGB to YCbCr), color correction, or denoising. It may be understood that the preprocessing unit 18 may be an optional component.

The video encoder 20 is configured to receive preprocessed image data 19 and provide encoded image data 21.

The communication interface 22 of the source device 12 may be configured to receive the encoded image data 21 and send the encoded image data 21 (or any further processed version thereof) through a communication channel 13 to another device like the destination device 14 or any other device, for storage or direct reconstruction.

The destination device 14 includes the decoder 30 (for example, the video decoder 30), and may optionally include a communication interface or communication unit 28, a post-processor 32 (or post-processing unit 32), and a display device 34.

The communication interface 28 of the destination device 14 is configured to: receive the encoded image data 21 (or any further processed version thereof) directly from the source device 12 or from any other source device like a storage device, for example, the storage device is an encoded image data storage device; and provide the encoded image data 21 to the decoder 30.

The communication interface 22 and the communication interface 28 may be configured to send or receive the encoded image data 21 or encoded data over a direct communication link between the source device 12 and the destination device 14, for example, a direct wired or wireless connection, or over any type of network, for example, a wired or wireless network or any combination thereof, or any type of private and public network, or any kind of combination thereof.

The communication interface 22 may be, for example, configured to encapsulate the encoded image data 21 into an appropriate format, for example, a packet, and/or process the encoded image data using any type of transmission encoding or processing for transmission over a communication link or communication network.

The communication interface 28, corresponding to the communication interface 22, may be configured, for example, to receive the transmitted data and process the transmitted data using any kind of corresponding transmission decoding or processing and/or decapsulating to obtain the encoded image data 21.

Both the communication interface 22 and communication interface 28 may be configured as unidirectional communication interfaces as indicated by an arrow for the communication channel 13 in FIG. 1 pointing from the source device 12 to the destination device 14, or bi-directional communication interfaces, and may be configured, for example, to send and receive messages, to set up a connection, and acknowledge and exchange any other information related to the communication link and/or data transmission, for example, encoded image data transmission.

The decoder 30 is configured to receive the encoded image data 21, and provide decoded image data 31 or a decoded image 31.

The post-processor 32 of the destination device 14 is configured to post-process the decoded image data 31 (also referred to as reconstructed image data), for example, the decoded image 31, to obtain post-processed image data 33, for example, a post-processed image 33. The post-processing performed by the post-processing unit 32 may include, for example, color format conversion (for example, from YCbCr to RGB), color correction, trimming, or re-sampling, or any other processing for generating the decoded image data 31 displayed by display device 34.

The display device 34 of the destination device 14 is configured to receive the post-processed image data 33, to display an image to a user, a viewer, or the like. The display device 34 may be or may include any type of display, for example, an integrated or external display screen or display, configured to display a reconstructed image. For example, the display screen may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS) display, a digital light processor (digital light processor, DLP), or any type of another display screen.

Although FIG. 1 depicts the source device 12 and the destination device 14 as separate devices, the device embodiments may alternatively include both the source device 12 and the destination device 14 or both functions of the source device 12 and the destination device 14, that is, include both the source device 12 or a corresponding function and the destination device 14 or a corresponding function. In these embodiments, the source device 12 or the corresponding function and the destination device 14 or the corresponding function may be implemented by using same hardware and/or software or by using separate hardware and/or software or any combination thereof.

Based on the descriptions, existence and (accurate) division of different units or functions of the source device 12 and/or the destination device 14 shown in FIG. 1 may vary with actual devices and applications. This is obvious to a person skilled in the art.

FIG. 2A illustrates a block diagram of a content providing system. The following describes a content providing system of a content delivery service used in this application with reference to FIG. 2A. The content providing system 20 includes a capture device 2102, a terminal device 2106, and (optionally) a display 2126. The capture device 2102 communicates with the terminal device 2106 over a communication link 2104. The communication link may include the communication channel 13 described above. The communication link 2104 includes but not limited to Wi-Fi, Ethernet, wired, wireless (3G/4G/5G), USB, or any kind of combination thereof, or the like.

The capture device 2102 generates data and encodes the data. Alternatively, the capture device 2102 may distribute the data to a streaming media server (not shown in the figure), and the server encodes the data and transmits the encoded data to the terminal device 2106. The capture device 2102 includes but not limited to a camera, a smartphone or tablet computer, a computer or notebook computer, a video conference system, a PDA, a vehicle-mounted device, or any combination thereof. For example, the capture device 2102 may include the foregoing source device 12. When the data includes a video, an encoder 20 of the capture device 2102 may actually perform video encoding processing. When the data includes an audio (namely, a voice), the encoder 20 of the capture device 2102 may actually perform audio encoding processing. For some practical scenarios, the capture device 2102 distributes encoded video data and encoded audio data by multiplexing the encoded video data and the encoded audio data together. For other practical scenarios, for example, in the video conference system, the encoded audio data and the encoded video data are not multiplexed. The capture device 2102 distributes the encoded audio data and the encoded video data to the terminal device 2106 separately.

The terminal device 2106 of the content providing system 20 receives and regenerates the encoded data. The terminal device 2106 may be a device with data receiving and restoring capabilities, for example, a smartphone or tablet computer 2108, a computer or laptop computer 2110, a network video recorder (network video recorder, NVR)/digital video recorder (digital video recorder, DVR) 2112, a television 2114, a set-top box (set-top box, STB) 2116, a video conference system 2118, a video surveillance system 2120, a personal digital assistant (personal digital assistant, PDA) 2122, a vehicle-mounted device 2124, or any combination thereof, or the like capable of decoding the encoded data. For example, the terminal device 2106 may include the foregoing destination device 14. When the encoded data includes a video, the video decoder 30 of the terminal device is prioritized to perform video decoding. When the encoded data includes an audio, an audio decoder of the terminal device is prioritized to perform audio decoding processing. The terminal device 2106 may be a video play application program, a streaming media play application program, a streaming media play platform, a live streaming platform, or the like that runs on the terminal device.

For a terminal device with a display, for example, the smartphone or tablet computer 2108, the computer or laptop computer 2110, the NVR/DVR 2112, the television 2114, the PDA 2122, or the vehicle-mounted device 2124, the terminal device can send decoded data to the respective display. For the terminal device without a display, for example, the STB 2116, the video conference system 3118, or the video surveillance system 2120, the terminal device is connected to the external display 2126, to receive and display the decoded data.

When each device in this system performs encoding or decoding, the image encoding device or the image decoding device, as shown in the foregoing embodiments, can be used.

FIG. 2B illustrates a structure of the terminal device 2106 in FIG. 2A. After the terminal device 2106 receives a bitstream from the capture device 2102, a protocol processing unit 2202 analyzes a transmission protocol of the bitstream. The protocol includes but is not limited to the real-time streaming protocol (Real-time Streaming Protocol, RTSP), the hypertext transfer protocol (Hypertext Transfer Protocol, HTTP), the HTTP live streaming protocol (HTTP Live streaming protocol, HLS), the MPEG dynamic adaptive streaming over HTTP (MPEG Dynamic Adaptive Streaming over HTTP, MPEG-DASH), the real-time transport protocol (Real-time Transport protocol, RTP), the real-time messaging protocol (Real-time Messaging Protocol, RTMP), or any combination thereof.

After the protocol processing unit 2202 processes the stream, a stream file is generated. The file is output to a demultiplexing unit 2204. The demultiplexing unit 2204 can separate multiplexed data into the encoded audio data and the encoded video data. As described above, for some practical scenarios, for example, in the video conference system, the encoded audio data and the encoded video data are not multiplexed. In this case, the encoded data is transmitted to a video decoder 2206 and an audio decoder 2208 without through the demultiplexing unit 2204.

A video elementary stream (ES), an audio ES, and an optional subtitle are generated through demultiplexing processing. The video decoder 2206 that includes the video decoder 30 as described in the foregoing embodiments decodes the video ES based on the decoding method as shown in the foregoing embodiments to generate a video frame, and sends the data to a synchronization unit 2212. The audio decoder 2208 decodes the audio ES to generate an audio frame, and sends the data to the synchronization unit 2212. Alternatively, the video frame may be stored in a buffer (not shown in the figure) before being sent to the synchronization unit 2212. Similarly, the audio frame may be stored in a buffer (not shown in the figure) before being sent to the synchronization unit 2212.

The synchronization unit 2212 synchronizes the video frame and the audio frame, and provides the video/audio to a video/audio display 2214. For example, the synchronization unit 2212 synchronizes presentation of video and audio information. The information may be encoded in syntax using time stamps related to presentation of encoded audio and visual data and time stamps related to sending of a data stream.

If a subtitle is included in the bitstream, a subtitle decoder 2210 decodes the subtitle, and synchronizes the subtitle with the video frame and the audio frame, and provides the video/audio/subtitle for a video/audio/subtitle display 2216.

The present invention is not limited to the foregoing system, and either the image encoding device or the image decoding device in the foregoing embodiments may be used in another system like a vehicle.

FIG. 3A is a schematic working flowchart of a streaming media system to which an embodiment of this application is applicable. The following describes, with reference to FIG. 3A, the streaming media system to which an embodiment of this application is applicable.

The streaming media system includes a content creation module that generates required content data, for example, a video or an audio. The streaming media system further includes a video encoding module that encodes generated content by using an encoder. The streaming media system further includes a video stream transmission module that transmits an encoded video in a form of a bitstream. Optionally, a video stream transcoding module may convert a format of a video stream into a bitstream format of a transport protocol commonly used by an OTT (over-the-top) device. For example, the protocol includes but is not limited to the real-time streaming protocol (Real-time Streaming Protocol, RTSP), the hypertext transfer protocol (Hypertext Transfer Protocol, HTTP), the HTTP live streaming protocol (HTTP Live streaming protocol, HLS), the MPEG dynamic adaptive streaming over HTTP (MPEG Dynamic Adaptive Streaming over HTTP, MPEG-DASH), the real-time transport protocol (Real-time Transport protocol, RTP), the real-time messaging protocol (Real-time Messaging Protocol, RTMP), or any combination thereof. Optionally, a video stream storage module may store a raw format of the video stream and/or a plurality of converted bitstream formats for ease of use. Further, the streaming media system further includes a video stream encapsulation module, configured to encapsulate the video stream to generate an encapsulated video stream. The encapsulated video stream may be referred to as a video streaming media packet. For example, the video streaming media packet may be generated based on a transcoded video stream or the stored video stream. Further, the streaming media system further includes a content delivery network (content distribution network, CDN), and the CDN is configured to distribute the video streaming media packet to a plurality of OTT devices such as mobile phones, computers, tablets, and home projectors.

It should be noted that video encoding, video stream transmission, video stream transcoding, video stream storage, video streaming media packet generation, and the content delivery network may all be implemented on a cloud server.

FIG. 3B illustrates an architecture of a streaming media system. The following describes, with reference to FIG. 3B, an example architecture of a streaming media system in this application. The architecture of the streaming media system includes a client device, a content delivery network, and a cloud server.

A user on the client device sends a play or playback request to a cloud platform. Optionally, content of the sent request may be a title of a movie or television program to be played.

The cloud platform performs decision-making, replies to the client, and sends an address of the content requested by the client on the CDN to the client. Optionally, content sent to the client may be a URL (uniform resource locator). Specifically, a playback application program service in the cloud platform checks user authorization and permission, and then determines which specific files are required to process the playback request by considering features of each client and current network conditions. It should be noted that the content delivery network (CDN) periodically reports a running status, a learned route, and available content (file) to a cache control service on the cloud platform.

Then, the client sends a request to the CDN to play the content based on the address. The CDN provides the content for the client and finally completes the request of the client.

FIG. 4A is a diagram of a possible system architecture to which an embodiment of this application is applicable. The following describes the system architecture to which embodiments of this application are applicable with reference to FIG. 4A. The system architecture in embodiments of this application includes a front-end device, a transmission link, and a terminal display device.

The front-end device is configured to capture or produce HDR/SDR content (for example, an HDR/SDR video or image).

In a possible embodiment, the front-end device may be further configured to derive corresponding metadata from the HDR content. The metadata may include global mapping information, local mapping information, and dynamic metadata and static metadata that correspond to the HDR content. The front-end device may send the HDR content and the metadata to the terminal display device over the transmission link. Specifically, the HDR content and the metadata may be transmitted in a form of one data packet (namely, an HDR bitstream), or may be transmitted in a form of two data packets (namely, an HDR bitstream and a metadata stream). This is not specifically limited in embodiments of this application.

Optionally, the terminal display device may be configured to receive the metadata and the HDR content, obtain, based on the global mapping information and the local mapping information that are included in the corresponding metadata derived from the HDR content, and information about the terminal display device, a mapping curve for global tone mapping and local tone mapping on the HDR content, convert the HDR content into display content adapted to an HDR display device or an SDR device in the terminal display device, and display the display content. It should be understood that, in different embodiments, the terminal display device may include a display device having a display capability with a lower dynamic range or a higher dynamic range than the HDR content generated by the front-end device. This is not limited in this application.

Optionally, in this application, the front-end device and the terminal display device may be independent and different physical devices. For example, the front-end device may be a video capture device, or may be a video production device. The video capture device may be a device like a video camera, a camera, or an image drawing machine. The terminal display device may be a device with a video play function, for example, virtual reality (virtual reality, VR) glasses, a mobile phone, a tablet, a television, or a projector.

Optionally, the transmission link between the front-end device and the terminal display device may be a wireless connection or a wired connection. The wireless connection may use technologies such as long term evolution (long term evolution, LTE), the 5th generation (5th generation, 5G) mobile communication, and future mobile communication. The wireless connection may further include technologies such as wireless fidelity (wireless-fidelity, Wi-Fi), Bluetooth, and near field communication (Near Field Communication, NFC). The wired connection may include an Ethernet connection, a local area network connection, and the like. This is not specifically limited.

In this application, functions of the front-end device and functions of the terminal display device may alternatively be integrated into a same physical device, for example, a terminal device having a video photographing function, like a mobile phone or a tablet. In this application, a part of the functions of the front-end device and a part of the functions of the terminal display device may alternatively be integrated into a same physical device. This is not specifically limited.

FIG. 4B illustrates a system 100 to which an HDR video (or HDR image) processing method is applied. As shown in FIG. 4B, an HDR end-to-end processing system includes but is not limited to a transmit end (which may also be referred to as an encoder side) and a receive end (which may also be referred to as a decoder side or a display end), and optionally, further includes a transcoder side. The transmit end includes but is not limited to an HDR preprocessing module 110 and an HDR video encoding module 120. The decoder side includes but is not limited to an HDR video decoding module 130, an HDR dynamic TM module 140, and the like.

An HDR video is input to the HDR preprocessing module 110. The HDR video may be a video captured by a capture device, or may be an HDR video processed by a colorist or a device according to an algorithm. Optical-electro transfer has been performed on pixel values of the HDR video. For example, the pixel values of the HDR video are values in PQ domain. For example, a dynamic range of the capture device in a specific photographing status is usually fixed. To obtain an image with a higher dynamic range, images with different exposures at a same moment are usually captured, and the images with different exposures are merged. A bit width of the obtained high dynamic range image is usually greater than 10 bits, to accommodate a scene with a high dynamic range.

The HDR preprocessing module 110 is responsible for deriving static metadata and dynamic metadata. If the HDR video uses a director mode, the HDR preprocessing module 110 calculates a curve parameter of tone mapping (tone mapping, TM) in the director mode, and the curve parameter of TM in the director mode are written into metadata.

The HDR video encoding module 120 encodes the HDR video and the metadata, and the metadata is embedded into a user-defined part in a bitstream. The HDR video encoding module 120 may use an encoder compliant with any standard, for example, high efficiency video coding (High Efficiency Video Coding, HEVC) or the second generation digital audio and video coding standard (Audio Video Coding Standard 2, AVS2). After the HDR video encoding module completes encoding, the encoder side may transmit the bitstream to the decoder side. For example, 10-bit encoding is supported in widely supported HEIF, H.265, and H.266. In widely supported JPEG and H.264, 8-bit encoding is supported, but HDR encoding is not well supported.

Optionally, in some examples, the encoder side may transmit a bitstream to the transcoder side. The transcoder side processes the bitstream, and then stores the bitstream or transmits the bitstream to the decoder side. Optionally, the encoder side and the transcoder side may be disposed in different devices, or may be disposed in a same device (for example, both disposed at the transmit end). This is not specifically limited in this application.

For example, after an HDR video is decoded, an encoder encodes the HDR video. This is a transcoding process that is usually used by application programs and services in a video distribution process through a server.

After the HDR image and video are decoded, HDR pixel values of frames, and an HDR format identifier and information are obtained. The HDR image usually needs to be sent to an image processing module to complete operations such as image upsampling/downsampling and enhancement. Then, the HDR pixel values, and the HDR format identifier and information that are processed are sent to the encoder for re-encoding.

The HDR video decoding module 130 on the decoder side (namely, the receive end) decodes the bitstream according to a standard corresponding to a format of the bitstream, and outputs a decoded HDR video and HDR metadata.

The HDR dynamic TM module 140 calculates a TM curve based on the decoded HDR video, the metadata, and peak luminance of a display device, performs tone mapping, and finally outputs the video to a display. If the HDR video uses the director mode, the HDR dynamic TM module 140 directly uses a curve parameter in the metadata without calculation.

Before the HDR video is input to the HDR preprocessing module 110, optical-electro transfer needs to be performed on the pixel values of the HDR video. Maximum luminance information of the display device cannot reach luminance information of the real world, and images are viewed on the display device. Therefore, an optical-electro transfer function is required.

Optionally, based on the system shown in FIG. 4A or FIG. 4B, to obtain good experience on the HDR image, an end-to-end process is required, that is, an HDR requirement from a production end (corresponding to the foregoing transmit end for generation and encoding) to a distribution end (corresponding to the foregoing transcoder side for transcoding, decoding, and re-encoding) and then to a terminal device (corresponding to the foregoing receive end for decoding and display) needs to be met.

(1) Generate an HDR image

A dynamic range of the capture device (for example, a video camera or a camera) in a specific photographing status is usually fixed. To obtain an image with a higher dynamic range, images with different exposures at a same moment may be captured, and the images with different exposures are merged. A bit width of the obtained high dynamic range image is usually greater than 10 bits, to accommodate a scene with a high dynamic range.

(2) Encode and decode the HDR image and video

In widely supported HEIF, H.265, and H.266, 10-bit encoding is supported, and therefore HDR encoding is well supported.

(3) Distribute and transcode the HDR image and video

After the HDR image is decoded and processed, the encoder encodes the HDR image. This is a transcoding process that is usually used by application programs and services in an image distribution process through a server.

After the HDR image is decoded, HDR pixel values of frames, and an HDR format identifier and information are obtained. The HDR image usually needs to be sent to the image processing module to complete operations such as image upsampling/downsampling and enhancement. Then, the HDR pixel values, and the HDR format identifier and information that are processed are sent to the encoder for re-encoding.

After an SDR image is decoded, SDR pixel values of frames are obtained. The SDR image usually needs to be sent to the image processing module to complete operations such as image upsampling/downsampling and enhancement. Then, the processed SDR pixel values are sent to the encoder for re-encoding.

(4) The receive end performs decoding and displaying

After receiving the bitstream, the receive end invokes a system decoding interface, to obtain a decoded pixel value buffer. The pixel value buffer passes through a graphics pathway, to obtain a to-be-displayed pixel value buffer. The to-be-displayed pixel value buffer is configured in display hardware by invoking a system display interface. The display hardware displays the to-be-displayed pixel value buffer based on a status of the display device, including remapping a dynamic range (which may also be referred to as tone mapping in embodiments of this application).

The following describes technical terms that may be used in this application.

1. Dynamic range (dynamic range)

The dynamic range indicates a ratio of a maximum value to a minimum value of a variable in a plurality of fields. In a digital image, the dynamic range indicates a ratio of a maximum grayscale value to a minimum grayscale value in an image displayable range.

In the nature, luminance of a night scene under the starry sky is about 0.001 $cd/m^2$, luminance of the sun is $10^9$ $cd/m^2$, and a dynamic range can reach an order of magnitude of $10^9/0.001 = 10^{12}$ $cd/m^2$. However, in the real world of the nature, the luminance of the sun and luminance of starlight are not obtained simultaneously. Therefore, in a same scene in the real world, a dynamic range in the real world is usually between $10^{-3}$ $cd/m^2$ and $10^6$ $cd/m^2$, and is referred to as a high dynamic range (high dynamic range, HDR). Currently, in most color digital images, grayscale values of red (R), green (G), and blue (B) channels each are stored by using 1 byte (8 bits), that is, grayscale ranges of the R, G, and B channels are from 0 to 255, where 0 to 255 is a dynamic range of the image, and is referred to as a low dynamic range (low dynamic range, LDR).

$cd/m^2$ may also be represented as nit, and nit is a unit of illumination.

2. Optical-electro transfer function (optical-electro transfer function, OETF)

FIG. 5 illustrates dynamic range mapping in an imaging process in the real world. An imaging process of a digital camera is actually mapping from a high dynamic range of the real world to a low dynamic range of a digital image. As shown in FIG. 1, in the real world, in addition to the luminance of starlight and the luminance of the sun, luminance of moonlight is 1 $cd/m^2$, luminance of indoor lighting is 100 $cd/m^2$, luminance in outdoor cloudy weather is 500 $cd/m^2$, and luminance in outdoor sunny weather is 2000 $cd/m^2$. There is a mapping relationship between a luminance range of 100 $cd/m^2$ to 2000 $cd/m^2$ in the real world and a luminance range of 1 $cd/m^2$ to 200 $cd/m^2$ corresponding to a storage mode of the display device.

Because the storage mode of the display device cannot reach high luminance in the real world, an electro-optical transfer function (electro-optical transfer function, EOTF) is required to represent the luminance in the real world as the luminance corresponding to the storage mode of the display device. For example, if luminance in the real world is 10000 $cd/m^2$, and the display device stores luminance information by using 10 bits (bit), a maximum value that can be stored in this storage mode is 1023. Therefore, 10000 $cd/m^2$ may be represented as 1023.

A standard dynamic range (standard dynamic range, SDR) image, also referred to as a low dynamic range image, is an image with a dynamic range from 1 $cd/m^2$ to 100 $cd/m^2$. The image complies with BT.709 or sRGB color gamut, and a gamma curve may be used as an optical-electro transfer curve. The SDR image correspond to the HDR image. An 8-bit image in a format like JPEG may be considered as an SDR image. Before video cameras that can photograph HDR images emerge, conventional cameras can record photographed light information within a specific range only by controlling an exposure value. Maximum luminance information of the display device cannot reach luminance information of the real world, and images are viewed on the display device. Therefore, the optical-electro transfer function is required. An earlier display device is a cathode ray tube (cathode ray tube, CRT) display, and an optical-electro transfer function of the cathode ray tube display is a gamma (Gamma) function.

As display devices upgrade, illumination ranges of the display devices continuously increase. Illumination of an existing HDR display reaches 600 cd/m$^2$, and illumination of an advanced HDR display can reach 2000 cd/m$^2$. Therefore, an improved optical-electro transfer function is required to adapt to upgrade of the display device. Currently, common optical-electro transfer functions include three types: a perceptual quantizer (perception quantization, PQ) optical-electro transfer function, a hybrid log-gamma (hybrid log-gamma, HLG) optical-electro transfer function, and a scene luminance fidelity (scene luminance fidelity, SLF) optical-electro transfer function. For the foregoing three curves, refer to the conventional technology. Details are not described in this application.

3. Dynamic range mapping

Dynamic range mapping can be applied to adaptation between an HDR signal from the front end and an HDR display device of the display end. For example, the front end captures an illumination signal at 4000 cd/m$^2$, an HDR display capability of the HDR display device of the display end is 500 cd/m$^2$, and mapping the illumination signal at 4000 cd/m$^2$ to the 500 cd/m$^2$ display device is a tone mapping (tone mapping, TM) process from high to low. Dynamic range mapping can also be applied to adaptation between an SDR signal from the front end and the HDR display device of the display end. For example, the front end captures an illumination signal at 100 cd/m$^2$, the HDR display capability of the HDR display device of the display end is 2000 cd/m$^2$, and mapping the illumination signal at 100 cd/m$^2$ to the 2000 cd/m$^2$ display device is a TM process from low to high.

Currently, there are two dynamic-range mapping methods: static mapping and dynamic mapping. In the static mapping method, a single piece of data is used to perform an overall TM process based on same video content or same hard disk content, that is, there is usually a same mapping curve for various scenes. This method has advantages that a video needs to carry less data and a processing procedure is simple, but has a disadvantage that information may be lost in some scenes because the same mapping curve is used for TM in all scenes. For example, if the mapping curve focuses on protecting bright regions, some details may be lost or even invisible in some extremely dark scenes. Consequently, video display effect is affected. In the dynamic mapping method, a mapping curve is dynamically adjusted for each scene or each frame of content based on a specific region. This method has an advantage that differentiated processing can be implemented for different scenes or frames, but has a disadvantage that a video needs to carry a large amount of data because related scene information needs to be carried in each frame or scene.

4. Single-layer bitstream

The single-layer bitstream may be an enhancement image bitstream or a base image bitstream. The enhancement image bitstream includes one or more enhancement images. The base image bitstream includes one or more base images. Optionally, the HDR video (or HDR image) in the conventional technology may be encoded according to H.265 or the like and transmitted, and transcoding is performed on the single-layer video (that is, the single-layer bitstream) in a transmission process. After the HDR video is decoded, HDR pixel values of frames, and an HDR format identifier and information are obtained. The HDR video usually needs to be sent to the image processing module to complete operations such as image upsampling/downsampling and enhancement. Then, the HDR pixel values, and the HDR format identifier and information that are processed are sent to the encoder for re-encoding.

5. Double-layer bitstream

The double-layer bitstream includes encoded data of a base image (which may be referred to as first encoded data in embodiments of this application) and encoded data of an enhancement image (which may be referred to as second encoded data in embodiments of this application). The encoded data of the base image represents the enhancement image (which may also be referred to as an enhancement layer image or the like, which is not limited in this application), and the encoded data of the enhancement image represents the base image (which may also be referred to as a base layer image, a basic image, a basic layer image, or the like, which is not limited in this application). In embodiments of this application, the double-layer bitstream may include encoded data of one or more base images and encoded data of one or more enhancement images. In the following embodiments, when the image (including enhancement image data or base image data) is processed, unless otherwise specified, same processing is performed on each piece of image data. In embodiments of this application, the double-layer bitstream may be an image (or picture) bitstream or a video bitstream. In other words, the enhancement image and the base image of the double-layer bitstream may be pictures or videos, that is, the image display method in embodiments of this application can be applied to processing of an image bitstream or processing of a video bitstream. Optionally, in some examples, the double-layer bitstream may also be understood as that an enhancement image bitstream and a base image bitstream are encapsulated into one bitstream. In other words, after receiving the double-layer bitstream, the receive end or the transcoder side processes (which may be referred to as decapsulation processing) the double-layer bitstream, to obtain the base image bitstream and the enhancement image bitstream. In other words, processing (including decoding, image processing, encoding, and the like) on the enhancement image in embodiments of this application may be understood as processing on the enhancement image stream (namely, one or more enhancement images). Processing (including decoding, image processing, encoding, and the like) on the base image may be understood as processing on the base image stream (namely, one or more base images). This is not limited in this application, and details are not described again in the following.

6. A base image (base image) describes an independent image data structure, and includes pixels and image-related metadata.

7. An enhancement image (enhancement image) describes an enhancement image data structure, and includes pixels and image-related metadata.

8. A composite image may also be referred to as a derived alternate image, an alternate image, a replaceable image, a substitute image, or the like. This is not limited in this application. The composite image describes an image data structure that is obtained through processing performed based on a specified format in embodiments of this application and that is used for display or subsequent processing, and includes pixels and image-related metadata.

9. Metadata (metadata) describes attributes and features of an image, and data of key information required during image processing.

In this application, the double-layer bitstream may be an image (or picture) bitstream or a video bitstream. In other words, the enhancement image data and the basic image data in the double-layer bitstream may be picture data or video data, that is, the image display method in embodiments of this application can be applied to processing of an image bitstream or processing of a video bitstream.

FIG. 6 illustrates a system block diagram of a receive end. Refer to FIG. 6. The receive end includes but is not limited to at least one of the following: a decapsulation module, a decoding module, an enhancement image generation module, and a tone mapping module.

At the receive end, after a double-layer bitstream is received, the decapsulation module decapsulates the bitstream, to derive encoded data of a base image, encoded data of an enhancement image, and metadata.

Then, the decoding module separately decodes the encoded data of the base image (for example, which may also be denoted as first encoded data in embodiments of this application), the encoded data of the enhancement image (for example, which may also be denoted as second encoded data in embodiments of this application), and encoded data of the metadata, to obtain a base image, an enhancement image, and the metadata. Specifically, the decoding module (which may also be referred to as an image decoding module, which is not limited in this application) is configured to decode the encoded data of the base image, to obtain the base image; decode the encoded data of the enhancement image, to obtain the enhancement image; and decode the encoded data of the metadata, to obtain the metadata.

In embodiments of this application, each bitstream includes at least one image (which may also be referred to as image data). For example, after the encoded data of the enhancement image is decoded, at least one enhancement image (enhance1 to enhanceN) can be obtained, and after the encoded data of the base image is decoded, at least one base image (basel to baseN) can be obtained. In embodiments of this application, a combination of at least one enhancement image and at least one base image is referred to as image data for short. Details are not described again in the following.

Optionally, the decoding module may decode the bitstream by using decoders such as high efficiency video coding (High Efficiency Video Coding, HEVC) and the joint photographic experts group (Joint Photographic Experts Group, JPEG).

In a possible implementation, the image data (including the enhancement image and the base image) obtained by the decoding module may be image data in any color space form like RGB or YUV. This is not limited in this application. The enhancement image and the base image may have a same color space form or different color space forms. This is not limited in this application.

In another possible implementation, a bit width of the image data may be 8 bits, 10 bits, 12 bits, or the like. This is not limited in this application.

In embodiments of this application, the metadata may be embedded into a user-defined part in the bitstream during encoding. For example, the user-defined part may be a supplemental enhancement information (Supplemental Enhancement Information, SEI) field in HEVC or versatile video coding (Versatile Video Coding, VVC), a customized network abstraction layer (Network Abstraction Layer, NAL) unit, or another reserved field. Alternatively, the user-defined part may be an app extension information field encapsulated in a JEIF, a data segment encapsulated in MP4, or the like. The user-defined part may be set based on an actual requirement. This is not limited in this application.

Still refer to FIG. 6. The enhancement image generation module (which may also be referred to as a composition module) obtains a composite image based on the base image and the enhancement image.

An image processing module (which may also be referred to as the tone mapping module) may perform display adaptation on the composite image based on the metadata and display information of an electronic device, to output a target image.

A display module displays the target image on a display screen in response to the obtained target image. The target image may also be referred to as a display image or the like. This is not limited in this application.

Optionally, the modules in FIG. 6 may be integrated into a same chip or located on different chips. For example, an encapsulation module, the decoding module, an enhancement image composition module, and the image processing module may be integrated into a same chip, and the display module may be integrated into another chip. The modules may communicate with each other through a bus or the like. The modules may be disposed based on an actual requirement. This is not limited in this application.

FIG. 7 is a schematic flowchart of an image display method according to an embodiment of this application. The image display method may be performed by the foregoing electronic device at the receive end (referred to as an electronic device below), for example, a destination device, a terminal device, a terminal display device, a client device, or an OTT device. FIG. 7 is described as a series of steps or operations. It should be understood that procedures in FIG. 7 may be performed in various orders and/or simultaneously, and are not limited to an execution order shown in FIG. 7. The following steps are specifically included but are not limited thereto.

Step 701: Obtain a double-layer bitstream, where the double-layer bitstream includes first encoded data, second encoded data, and metadata, the first encoded data represents a base image, and the second encoded data represents an enhancement image.

In embodiments of this application, a bitstream may be the double-layer bitstream, including encoded data of the base image (for example, which may be denoted as the first encoded data in embodiments of this application) and encoded data of the enhancement image (for example, which may be denoted as the second encoded data in embodiments of this application). The encoded data of the base image represents the base image, and the encoded data of the enhancement image represents the enhancement image. It may also be understood as that the encoded data of the base image is generated by encoding the base image, and the encoded data of the enhancement image is generated by encoding the enhancement image.

Optionally, the base image may include one or more base images. The enhancement image may include one or more enhancement images.

Optionally, the bitstream includes the metadata. In another embodiment, the metadata may alternatively be a separate bitstream. This is not limited in this application.

For example, a decapsulation module decapsulates the bitstream, and outputs an enhancement image bitstream, a base image bitstream, and a metadata bitstream.

In embodiments of this application, the double-layer bitstream may be an image (or picture) bitstream or a video bitstream. In other words, the enhancement image and the base image of the double-layer bitstream may be picture data or video data, that is, the image display method in embodiments of this application can be applied to processing of an image bitstream or processing of a video bitstream.

In addition, the bitstream may further include the metadata. Optionally, the metadata may alternatively be a separate bitstream. This is not limited in embodiments of this application.

In a possible implementation, an image (including the base image and the enhancement image) obtained by parsing the bitstream may be image data in any color space form like RGB or YUV. This is not specifically limited in embodiments of this application.

In a possible implementation, a bit width of the image data may be 8 bits, 7 bits, 12 bits, or the like. This is not specifically limited in embodiments of this application.

In embodiments of this application, the metadata may be embedded into a user-defined part in the bitstream during encoding. For example, the user-defined part may be a supplemental enhancement information (Supplemental Enhancement Information, SEI) field in HEVC or versatile video coding (Versatile Video Coding, VVC), a customized network abstraction layer (Network Abstraction Layer, NAL) unit, or another reserved field. Alternatively, the user-defined part may be an app extension information field encapsulated in a JEIF, a data segment encapsulated in MP4, or the like. The user-defined part may be set based on an actual requirement. This is not specifically limited in embodiments of this application.

In a possible implementation, the metadata includes but is not limited to at least one of the following information: a source data format, region split information, region traversal sequence information, an image feature, tone mapping information, and the like.

In this embodiment of this application, the tone mapping information includes but is not limited to at least one of the following information: tone mapping information used for generating a composite image, tone mapping information used for a display image (which may also be referred to as tone mapping information used for a target image), an adjustment parameter, and the like.

For example, the tone mapping information used for generating a composite image includes but is not limited to a base image tone mapping parameter and an enhancement image tone mapping parameter. The base image tone mapping parameter is used to perform tone mapping on the base image. The enhancement image tone mapping parameter is used to perform tone mapping on the enhancement image.

For example, the tone mapping information used for a display image includes but is not limited to at least one piece of preset display information and a tone mapping parameter corresponding to each piece of preset display information. For a concept and a type of preset display information, refer to descriptions of display information of the electronic device in the following embodiments. Details are not described herein.

Optionally, the tone mapping information used for generating a composite image participates in a generation process of a composite image. The tone mapping information used for generating a composite image may be understood as being used to remap the base image and/or the enhancement image, to adjust a data amount of the base image and/or a data amount of the enhancement image, for example, reduce the data amount or increase the data amount. For example, at a transmit end or a transcoder side, image quality of the enhancement image and the base image may be degraded, to reduce data transmission bandwidth. At the receive end, the base image and the enhancement image may be remapped based on first tone mapping information, to obtain an image before the quality is degraded. This improves quality of an image displayed at a display end.

Optionally, the tone mapping information used for a display image participates in a process of generating a display image, that is, a process of performing tone mapping on the composite image to generate the display image. This is mainly used to enable the display image to adapt to a display capability of a display device. This may be understood as that tone mapping is performed on a composite image that may not match the display capability of the display device, to obtain a display image that can match the display capability of the display device.

Optionally, the tone mapping parameter may be one or more of the three curves in the foregoing embodiments, or may be another type of parameter. This is not limited in this application.

Step 702: Obtain the base image and the enhancement image based on the first encoded data and the second encoded data.

For example, the electronic device may obtain the base image based on the first encoded data and obtain the enhancement image based on the second encoded data.

Specifically, a decoding module of the electronic device may decode the first encoded data and the second encoded data, to obtain the base image and the enhancement image. For example, the decoding module decodes the encoded data of the base image (namely, the first encoded data), to obtain the base image. In addition, the decoding module decodes the encoded data of the enhancement image (namely, the second encoded data), to obtain the enhancement image.

The decoding module decodes each bitstream according to a standard corresponding to a bitstream format, to output the image data (including the enhancement image and the base image) and the metadata.

The decoder of the electronic device decodes the bitstream according to the standard corresponding to the bitstream format, to output the image (including the base image and the enhancement image) and the metadata.

Optionally, the bitstream may be decoded by using decoders such as high efficiency video coding (High Efficiency Video Coding, HEVC) and the joint photographic experts group (Joint Photographic Experts Group, JPEG).

Step 703: Merge the base image and the enhancement image, to obtain a composite image.

For example, after obtaining the base image and the enhancement image, the electronic device may perform tone mapping processing on the base image and the enhancement image based on the tone mapping information, in the metadata, used for generating a composite image, and merge the processed base image and enhancement image, to obtain the composite image.

Specifically, the electronic device optionally performs tone mapping on the base image, to obtain the tone-mapped base image. In addition, the electronic device optionally performs tone mapping on the enhancement image, to obtain the tone-mapped enhancement image. The electronic device may merge the processed base image and enhancement image, to obtain an intermediate image. Optionally, the electronic device further processes the intermediate image based on the adjustment parameter and the like in the metadata, to obtain the composite image.

Step 704: Perform tone mapping on the composite image based on the first tone mapping information, to obtain a first target image, where the first tone mapping information is determined based on the metadata and first display information of the electronic device.

For example, the electronic device places the obtained composite image in a corresponding buffer (which may be referred to as a composite image buffer). That the electronic device needs to process the composite image may be understood as processing the composite image in the buffer, or may be understood as deriving the composite image in the buffer and performing corresponding processing. This is not limited in this application.

For example, the electronic device may perform tone mapping (which may also be referred to as a tone mapping operation or tone mapping processing) on the composite image based on second tone mapping information, to obtain the target image. The target image may also be referred to as a display image or a to-be-displayed image.

In this embodiment of this application, tone mapping information used for a target image is determined by the electronic device based on the display information of the electronic device and the tone mapping information used for a target image (which may also be referred to as the tone mapping information used for a display image) in the metadata.

Specifically, the metadata includes the tone mapping information used for a target image, and the tone mapping information used for a target image includes but is not limited to at least one piece of tone mapping information and at least one piece of preset display information corresponding to the at least one piece of tone mapping information. Optionally, tone mapping information one-to-one corresponds to preset display information.

The display information of the electronic device includes but is not limited to display information of a display screen of the electronic device and display environment information. Optionally, the display information of the display screen includes but is not limited to at least one of a luminance range of the display screen, a size of the display screen, and the like. Optionally, the display environment information includes but is not limited to at least one of luminance of an ambient environment of the electronic device, a color temperature of the ambient environment, and the like. Optionally, the electronic device may include a module that records the display information of the display screen, and the electronic device may obtain current display information of the display screen of the electronic device from the module. Optionally, the display information of the display screen may change. For example, the luminance range of the display screen may be changed in response to a received user operation. This is not limited in this application. Optionally, the electronic device may obtain the environment information such as the luminance of the environment and the color temperature of the environment by using a component like a sensor. For a specific obtaining manner, refer to the conventional technology. This is not limited in this application.

In this embodiment of this application, the electronic device may obtain the first tone mapping information or the second tone mapping information in the following embodiments based on the foregoing two types of information (namely, the tone mapping information, in the metadata, used for a target image and the display information of the electronic device). In the embodiments in FIG. 7 and FIG. 8A and FIG. 8B, only an obtaining manner of the first tone mapping information is used as an example for description. Obtaining manners of the second tone mapping information and more tone mapping information are the same. Examples are not described enumerated in this application.

In this embodiment of this application, the first tone mapping information may include but is not limited to a tone mapping curve. The tone mapping curve includes various forms such as sigmoid, cubic spline, gamma, and a straight line. For details, refer to the foregoing descriptions of the optical-electro transfer function. This is not specifically limited in this embodiment of this application. For example, the electronic device may obtain, through calculation based on the curve, a mapping relationship in which normalized source data is mapped to normalized image data.

In this embodiment of this application, a format of the metadata is not limited. For example, the metadata may be ST2094-40 including histogram information and tone-mapping curve parameter information, or may be ST2094-10 including tone-mapping curve parameter information.

Optionally, the metadata may include a plurality of pieces of preset display device information, for example, peak luminance, and further include a tone mapping curve for tone mapping on the peak luminance.

In a possible implementation, the electronic device may match the display information of the electronic device with at least one piece of preset display information in the tone mapping information, in the metadata, used for a target image.

For example, if matching succeeds, that is, the at least one piece of preset display information includes display information same as the display information of the electronic device, the electronic device may obtain a tone mapping curve corresponding to the matched preset display information.

Optionally, if the at least one piece of preset display information does not include display information same as the display information of the electronic device, for example, the electronic device may select, from the at least one piece of preset display information, one piece of preset display information that is most similar to the display information of the electronic device, and adjust, based on a difference value between the preset display information and the display information of the electronic device, tone mapping information (for example, a tone mapping curve) corresponding to the preset display information. For example, if current luminance of the electronic device is A, luminance indicated in preset display information that is most similar to the display information of the electronic device and that is in the metadata is B, and B is n times of A, the electronic device may adjust a tone mapping curve corresponding to the preset display information based on a difference (namely, n times) between the luminance B and the luminance A. For example, a parameter value of the tone mapping curve may be multiplied by n (a specific processing manner may be set based on an actual requirement, and this is merely an example for description, and is not limited in this application). In this way, an adjusted tone mapping curve (namely, the first tone mapping information) is obtained.

For another example, the electronic device may select a plurality of pieces of preset display information (for example, two or more pieces of preset display information) that are most similar to the display information of the electronic device, and adjust, based on difference values between the display information of the electronic device and the plurality of pieces of preset display information, a plurality of pieces of tone mapping information corresponding to the plurality of pieces of preset display information, to obtain the first tone mapping information. Optionally, an adjustment manner may be a weighted average manner, and may be set based on an actual requirement. This is not limited in this application.

Certainly, a manner of obtaining tone mapping information in this embodiment of this application is merely an example for description, and may be set based on an actual requirement. This is not limited in this application. For example, if the difference value between the preset display information and the display information of the electronic device is within a specific range (which may be set based on an actual requirement), the tone mapping information may not be adjusted, and is directly used as the first tone mapping information.

For example, the electronic device may perform tone mapping on the composite image based on the obtained first tone mapping information, to obtain the first target image.

Step 705: Display the first target image.

For example, the electronic device may display the first target image on the display screen. Optionally, this step may be understood as that an image processing module outputs the first target image to a display module, and the display module displays the first target image on the display screen. Certainly, in some examples, the electronic device in which the image processing module is located is separated from the display device in which the display module is located. This step may also be understood as that the electronic device triggers the display device to display the first target image.

In a possible implementation, within display duration corresponding to the first target image, the electronic device may change the display information of the electronic device in response to the received user operation. For example, display luminance of the electronic device is adjusted (that is, peak luminance is adjusted) in response to the received user operation. Optionally, the electronic device determines the second tone mapping information based on the metadata and current display information (for example, denoted as second display information) of the electronic device. For a specific determining manner, refer to the manner of determining the first tone mapping information. Details are not described herein again. The electronic device may perform tone mapping on the composite image based on the second tone mapping information, to obtain a second target image. In addition, the electronic device may display the second target image on the display screen. Therefore, in this example, the second target image displayed by the electronic device is an image adapted to a current display capability of the electronic device, to improve image display effect. In other words, as the display information of the electronic device is adjusted, the electronic device may re-determine corresponding tone mapping information based on dynamically changed display information, so that the generated target image can adapt to a scene in which the display information dynamically changes.

FIG. 8A and FIG. 8B illustrate a flowchart of an image display method. The following describes the procedure in FIG. 7 in detail with reference to FIG. 8A and FIG. 8B. Refer to FIG. 8A and FIG. 8B. The following steps are specifically included but are not limited thereto.

S801a: A decoding module decodes first encoded data, to obtain a base image.

S801b: The decoding module decodes second encoded data, to obtain an enhancement image.

For example, the decoding module obtains a double-layer bitstream, where the double-layer bitstream includes encoded data of the base image (for example, denoted as the first encoded data), encoded data of the enhancement image (for example, denoted as the second encoded data), and metadata.

The decoding module decodes the encoded data of the base image, to obtain the base image.

The decoding module decodes the encoded data of the enhancement image, to obtain the enhancement image.

Optionally, S801a and S802b may be processed in parallel or sequentially. An execution order is not limited in this application.

S802: The decoding module outputs the enhancement image and the base image to an enhancement image generation module.

For example, the decoding module outputs the enhancement image, the base image, and the metadata to the enhancement image generation module.

S803: The enhancement image generation module merges the base image and the enhancement image, to obtain a composite image.

In this embodiment of this application, the enhancement image generation module may perform tone mapping on the base image and/or the enhancement image based on tone mapping information (the foregoing tone mapping information used for generating a composite image) in the metadata, and then merge the tone-mapped base image and enhancement image, to obtain an intermediate image. The composite image is obtained based on the intermediate image.

The following describes a tone mapping process of the base image and the enhancement image, and a composition process of the tone-mapped base image and enhancement image.

1. Tone mapping of the base image

Tone mapping is performed on the base image (denoted as Base) based on tone mapping information of the base image, to obtain the tone-mapped base image (denoted as baseAfter).

FIG. 9 is a diagram of a tone mapping process according to an embodiment of this application. For example, as shown in FIG. 9, tone mapping is performed on the base image (for example, base[i]) based on the tone mapping information of the base image, to obtain the tone-mapped base image (for example, baseAfter[i]), where i indicates a pixel in the image.

For ease of description, in this embodiment of this application, a tone mapping process of a base image is used as an example for description. For a tone mapping process of another base image, refer to this process. Details are not described again.

In this embodiment of this application, the tone mapping process of the base image may include but are not limited to the following several manners:

Manner 1:

$$baseAfter[i] = base[i]$$

In this manner, the tone-mapped base image is the base image, which may be understood as that tone mapping processing is not performed.

Manner 2:

$$baseAfter[i] = base[i]*THH + (A - base[i])*THL$$

THH is an upper limit value of data of the base image, and THL is a lower limit value of the data of the base image. It may be understood that THH and THL indicate a data range of the base image, and A is a maximum value stored in the base image. It may be understood that in the manner 2, the data of the base image is normalized, so that a value of the data is normalized to a value range indicated by THH and THL. When the data of the base image is normalized to a range from 0 (corresponding to THL) to 1.0 (corresponding to THH), A is 1.0.

Optionally, THH and THL are tone mapping parameters, and are included in the tone mapping information in the metadata. Optionally, A is a preset value. In other words, a transmit end performs encoding based on the value of A, and correspondingly, a receive end also performs tone mapping processing based on the value of A. A specific value may be set based on an actual requirement. This is not specifically limited in embodiments of this application.

Optionally, THH and THL may alternatively be preset, that is, values agreed on by the transmit end and the receive end, and may be set based on an actual requirement. This is not specifically limited in embodiments of this application.

Manner 3:

$$baseAfter[i] = base[i] + THL$$

THL is a lower limit value of data of the base image. It may be understood that THL indicates a data range of the base image, that is, the data range is not less than THL. It may be understood that in the manner 3, the data of the base image is normalized, so that a value of the data is normalized to a value that is not less than a value range indicated by THL.

Optionally, THL is a tone mapping parameter, and is included in the tone mapping information in the metadata.

Optionally, THL may alternatively be preset, that is, a value agreed on by a transmit end and a receive end.

Manner 4:

$$baseAfter[i] = THH + A - base[i]$$

THH is an upper limit value of data of the base image. It may be understood that THH indicates a data range of the base image, that is, the data range is not greater than (higher than) THH, and A is a maximum value stored in the base image. It may be understood that in the manner 4, the data of the base image is normalized, so that a value of the data is normalized to a value that is not greater than a value range indicated by THH. When the data of the base image is normalized to a range from 0 to 1.0, a value of A is 1.0.

Optionally, THH is a tone mapping parameter, and is included in the tone mapping information in the metadata.

Optionally, THH may alternatively be preset, that is, a value agreed on by a transmit end and a receive end.

Manner 5:

$$baseAfter[i] = TMB(base[i])$$

TMB() is tone mapping information. Optionally, TMB() may be a global and/or local tone mapping function. In this manner, global tone mapping processing or local tone mapping processing may be performed on the base image based on TMB().

Optionally, the tone mapping information in the metadata may further include some parameters, in the TMB() function, indicating a mapping relationship. A decoding function may be used to determine the corresponding TMB() function based on the parameters.

Optionally, TMB() may alternatively be preset, that is, a value agreed on by a transmit end and a receive end.

Manner 6:

$$baseAfter[i] = TMB()*base[i]$$

TMB() is tone mapping information. Optionally, TMB() may be a global and/or local tone mapping function. In this manner, global tone mapping processing or local tone mapping processing may be performed on the base image according to the TMB() function.

In this way, tone mapping processing is performed according to the tone mapping function, so that reconstructed HDR image data obtained based on baseAfter is closer to raw HDR image data, and a data amount of enhancement image data in a second bitstream (for a concept, refer to the following) is smaller.

Optionally, the tone mapping information in the metadata may further include parameters, in the TMB() function, indicating a mapping relationship, and the corresponding TMB() function may be determined based on the parameters.

Optionally, TMB() may alternatively be preset, that is, a value agreed on by a transmit end and a receive end.

Manner 7:

$$baseAfter[i] = TMB(TMB1(base[i]))$$

TMB() and TMB1() are tone mapping information. Optionally, TMB() may be a global and/or local tone mapping function. Optionally, TMB1() may be in a form of line, spline, piecewise curve, or the like. It may be understood that TMB1() indicates to transform the base image base[i] to a specified range. In other words, the tone mapping information (for example, THL or THH) in the manner 2 to the manner 4 may also be represented by TMB1(), which may be understood as that corresponding TMB1() may be obtained based on the tone mapping information (for example, THH). Certainly, TMB1() in the manner 7 (and a manner 8) may also be represented in any one of the manner 2 to the manner 4. This is not specifically limited in this embodiment of this application.

Optionally, the tone mapping information in the metadata may further include parameters, in the TMB() function and the TMB1() function, indicating a mapping relationship, and the corresponding TMB() function and TMB1() function may be determined based on the parameters.

Optionally, TMB() and/or TMB1() may alternatively be preset, that is, a value agreed on by a transmit end and a receive end.

Manner 8:

$$baseAfter[i] = TMB()*TMB1(base[i])$$

TMB() and TMB1() are tone mapping information. Optionally, TMB() may be a global and/or local tone mapping function. Optionally, TMB1() may be in a form of line, spline, piecewise curve, or the like. It may be understood that TMB1() indicates to transform the base image base[i] to a specified range. In other words, the tone mapping information (for example, THL or THH) in the manner 2 to the manner 4 may also be represented by TMB1(), which may be understood as that corresponding TMB1() may be obtained based on the tone mapping information (for example, THH). Certainly, TMB1() in the manner 7 (and the manner 8) may also be represented in any one of the manner 2 to the manner 4. This is not specifically limited in this embodiment of this application.

Optionally, the tone mapping information in the metadata may further include parameters, in the TMB() function and the TMB1() function, indicating a mapping relationship, and the corresponding TMB() function and TMB1() function may be determined based on the parameters.

Optionally, TMB() and/or TMB1() may alternatively be preset, that is, a value agreed on by a transmit end and a receive end.

Manner 9:

$$baseAfter[i] = TMB()*TMB1(baseMid1[i]);$$

or

$$baseAfter[i] = TMB(TMB1(baseMid1[i])),$$

where

$$baseMid1[i] = F[base[i]] \text{ or } baseMid1[i] = \sum F[n]*base[i+n] \text{ and } baseAfter2[i] = base[i] - baseMid1[i]$$

The tone mapping information includes but is not limited to TMB(), TMB1(), and F[]. Optionally, TMB() may be a global and/or local tone mapping function. Optionally, TMB1() may be in a form of line, spline, piecewise curve, or the like. It may be understood that TMB1() indicates to transform the base image base[i] to a specified range. In other words, the tone mapping information (for example, THL or THH) in the manner 2 to the manner 4 may also be represented by TMB1(), which may be understood as that corresponding TMB1() may be obtained based on the tone mapping information (for example, THH). Certainly, TMB1() in the manner 7 (and the manner 8) may also be represented in any one of the manner 2 to the manner 4. This is not specifically limited in this embodiment of this application.
Optionally, F[] is a spatial filter parameter or another image smoothing function. baseMid1[i] and baseAfter2[i] may be obtained based on F[]. A filtering manner may include various forms, for example, bilateral filtering or interpolation filtering. This is not specifically limited in embodiments of this application.
Optionally, the tone mapping information in the metadata may further include parameters, in the TMB() function, the TMB1() function, and the F[] function, indicating a mapping relationship, and the corresponding TMB() function, TMB1() function, and F[] function may be determined based on the parameters.
Optionally, at least one of TMB(), TMB1(), and F[] may alternatively be preset, that is, a value agreed on by a transmit end and a receive end.
Manner 10:

$$baseAfter[i] = F[base[i]] \text{ or } baseAfter[i] = \sum F[n]*base[i+n]$$

$$baseAfter2[i] = base[i] - baseMid1[i]$$

F[] is a spatial filter parameter or another image smoothing function. baseMid1[i] and baseAfter2[i] may be obtained based on F[]. A filtering manner may include various forms, for example, bilateral filtering or interpolation filtering. This is not specifically limited in embodiments of this application.
Optionally, the tone mapping information in the metadata may further include parameters, in the F[] function, indicating a mapping relationship, and the corresponding F[] function may be determined based on the parameters.
Optionally, F[] may be preset, that is, a value agreed on by a transmit end and a receive end.

2. Tone mapping of the enhancement image

Tone mapping is performed on the enhancement image (denoted as enhance) based on tone mapping information of the enhancement image, to obtain the tone-mapped enhancement image (denoted as enhanceAfter).
For example, as shown in FIG. 9, tone mapping is performed on the enhancement image (for example, enhance [i]) based on the tone mapping information of the enhancement image, to obtain the tone-mapped enhancement image (for example, enhanceAfter[i]), where i indicates a pixel in the image.
For ease of description, in this embodiment of this application, a tone mapping process of an enhancement image is used as an example for description. For a tone mapping process of another enhancement image, refer to this process. Details are not described again.
In this embodiment of this application, the tone mapping process of the enhancement image may include but are not limited to the following several manners:
Manner 1:

$$enhanceAfter[i] = enhance[i]$$

In this manner, the tone-mapped enhancement image is the enhancement image, which may be understood as that tone mapping processing is not performed.
Manner 2:

$$enhanceAfter[i] = enhance[i]*THH + (A - enhance[i])*THL$$

THH is an upper limit value of data of the enhancement image, and THL is a lower limit value of the data of the enhancement image. It may be understood that THH and THL indicate a data range of the enhancement image, and A is a maximum value stored in the enhancement image. It may be understood that in the manner 2, the data of the enhancement image is normalized, so that a value of the data is normalized to a value range indicated by THH and THL. When the data of the enhancement image is normalized to a range from 0 (corresponding to THL) to 1.0 (corresponding to THH), A is 1.0.

Optionally, THH and THL are tone mapping parameters, and are included in the tone mapping information in the metadata. Optionally, A is a preset value. In other words, a transmit end performs encoding based on the value of A, and correspondingly, a receive end also performs tone mapping processing based on the value of A. A specific value may be set based on an actual requirement. This is not specifically limited in embodiments of this application.

Optionally, THH and THL may alternatively be preset, that is, values agreed on by the transmit end and the receive end, and may be set based on an actual requirement. This is not specifically limited in embodiments of this application.

Manner 3:

$$enhanceAfter[i] = enhance[i] + THL$$

THL is a lower limit value of data of the enhancement image. It may be understood that THL indicates a data range of the enhancement image, that is, the data range is not less than THL. It may be understood that in the manner 3, the data of the enhancement image is normalized, so that a value of the data is normalized to a value that is not less than a value range indicated by THL.

Optionally, THL is a tone mapping parameter, and is included in the tone mapping information in the metadata.

Optionally, THL may alternatively be preset, that is, a value agreed on by a transmit end and a receive end.

Manner 4:

$$enhanceAfter[i] = THH + A - enhance[i]$$

THH is an upper limit value of data of the enhancement image. It may be understood that THH indicates a data range of the enhancement image, that is, the data range is not greater than (higher than) THH, and A is a maximum value stored in the enhancement image. It may be understood that in the manner 4, the data of the enhancement image is normalized, so that a value of the data is normalized to a value that is not greater than a value range indicated by THH. When the data of the enhancement image is normalized to a range from 0 to 1.0, a value of A is 1.0.

Optionally, THH is a tone mapping parameter, and is included in the tone mapping information in the metadata.

Optionally, THH may alternatively be preset, that is, a value agreed on by a transmit end and a receive end.

Manner 5:

$$enhanceAfter[i] = TME(enhance[i])$$

TME() is tone mapping information. Optionally, TME() may be a global and/or local tone mapping function. In this manner, global tone mapping processing or local tone mapping processing may be performed on the enhancement image based on TME().

Optionally, the tone mapping information in the metadata may further include parameters, in the TME() function, indicating a mapping relationship, and the corresponding TME() function may be determined based on the parameters.

Optionally, TME() may alternatively be preset, that is, a value agreed on by a transmit end and a receive end.

3. Merge the tone-mapped base image and enhancement image, to obtain the intermediate image

The intermediate image (denoted as recHDR) is obtained based on the tone-mapped base image (denoted as baseAfter) and the tone-mapped enhancement image (denoted as enhanceAfter).

For example, as shown in FIG. 9, intermediate image data (for example, recHDR[i]) is obtained based on the tone-mapped base image (for example, baseAfter[i]) and the tone-mapped enhancement image (enhanceAfter[i]). It may also be understood as merging the tone-mapped base image and the tone-mapped enhancement image, to obtain the corresponding intermediate image.

For ease of description, in this embodiment of this application, a generation process of an intermediate image is used as an example for description. For a generation process of another intermediate image, refer to this process. Details are not described again.

In this embodiment of this application, the generation process of the intermediate image may include but are not limited to the following several manners:

Manner 1:

$$recHDR[i] = baseAfter[i]*enhanceAfter[i]$$

Manner 2:

$$recHDR[i] = baseAfter[i] + enhanceAfter[i]$$

Manner 3:

$$recHDR[i] = f1(baseAfter[i]) + f2(enhanceAfter[i])$$

Manner 4:

$$recHDR[i] = f1(baseAfter[i])*f2(enhanceAfter[i])$$

f1() and f2() are transform functions of a numerical domain. For example, the tone-mapped base image and/or the tone-mapped enhancement image may be transformed to a same numerical domain according to the f1() function and the f2() function, and then merged (including addition or multiplication).

It should be noted that the composition manners mentioned in this embodiment of this application are merely examples, and in another embodiment, another feasible composition manner may be used. This is not specifically limited in embodiments of this application.

Optionally, the tone mapping information in the metadata may include information indicating any composition solution, and a corresponding manner is selected based on the indication of the metadata.

Optionally, the composition manner may alternatively be preset, that is, a value agreed on by a transmit end and a receive end.

4. Obtain the composite image (denoted as HDRPic) based on the intermediate image

Specifically, as described above, the tone mapping information in the metadata may further include an adjustment parameter. The enhancement image generation module may perform value adjustment on at least one intermediate image (recHDR_1 to recHDR _N) based on the adjustment parameter, to obtain the composite image.

Adjustment manners are as follows:

Manner 1:

$$HDRPic[i] = recHDR[i]$$

In this manner, it may also be understood as that value adjustment is not performed, that is, value adjustment amplitude is 0. Certainly, it may also be understood as that the intermediate image is the composite image. In other words, the enhancement image generation module may merge the processed base image and enhancement image, to obtain the composite image.

Manner 2:

$$HDRPic[i] = recHDR[i] + X$$

X is the adjustment parameter.

Optionally, X may be the adjustment parameter in the tone mapping information in the metadata, or may be preset by a transcoder side. This is not limited in this application.

Manner 3:

$$HDRPic[i] = g(recHDR[i])$$

g() is an inverse normalization function, a mapping function, a tone mapping function, or an inverse mapping function.

Optionally, g() may be the adjustment parameter in the tone mapping information in the metadata, or may be preset by a transcoder side. This is not limited in this application. A decoding function may be used to determine the corresponding g() function based on the parameters. Optionally, g() may be a global and/or local tone mapping function. In this manner, the enhancement image generation module may perform global tone mapping processing or local tone mapping processing on the enhancement image according to the g() function.

It should be noted that the value adjustment step is an optional step. If the transmit end performs value adjustment during encoding, the receive end correspondingly performs value adjustment. On the contrary, if the transmit end does not perform value adjustment during encoding, the receive end does not need to perform value adjustment. Certainly, it may also be understood as that value adjustment is performed, and value adjustment amplitude is 0 (namely, the manner 1 of value adjustment).

In a possible implementation, as described above, one or more enhancement images and base images may be obtained through decoding. When there are a plurality of enhancement images and/or base images, the foregoing processing may be separately performed on the plurality of images, to obtain recHDR[i]. Specific processing manners are as follows:

Manner 1:

recHDR[i] = A*g(baseAfter1[i]*f1(enhanceAfter1[i])) + B*g(baseAfter2[i]*f2(enhanceAfter2[i])) + C*g(baseAfter3[i]*f3 ( enhanceAfter3[i]))...

f1(), f2(), and f3() are transform functions. The functions may be included in the tone mapping information in the metadata, or may be preset (that is, agreed on in advance). f() is used to perform numerical domain transform on the enhancement image and/or the base image. For detailed descriptions, refer to the foregoing descriptions. Details are not described herein again. g() is an inverse normalization function. Optionally, g() may be the adjustment parameter in the tone mapping information in the metadata, or may be preset. This is not specifically limited in embodiments of this application. Optionally, A, B, C, and the like are preset constants, or are included in the tone mapping information in the metadata.

Manner 2:

recHDR[i] = A*g(baseAfter1[i]*f1(enhanceAfter1[i])) + B*g(baseAfter2[i]) + C*g(baseAfter3[i])...

f1() is a transform function. The function may be included in the tone mapping information in the metadata, or may be preset (that is, agreed on in advance). f() is used to perform numerical domain transform on the enhancement image and/or the base image. For detailed descriptions, refer to the foregoing descriptions. Details are not described herein again. g() is an inverse normalization function. Optionally, g() may be the adjustment parameter in the tone mapping information in the metadata, or may be preset. This is not specifically limited in embodiments of this application. Optionally, A, B, C, and the like are preset constants, or are included in the tone mapping information in the metadata.

For example, this manner may be used to process a scene in which a bitstream includes one enhancement image and a plurality of base images.

Manner 3:

recHDR[i] = A*g(baseAfter1[i] + f1(enhanceAfter1[i])) + B*g(baseAfter2[i] + f2(enhanceAfter2[i])) +C*g(baseAfter3[i] + f3(enhanceAfter3[i]))...

f1(), f2(), and f3() are transform functions. The functions may be included in the tone mapping information in the metadata, or may be preset (that is, agreed on in advance). f() is used to perform numerical domain transform on the enhancement image and/or the base image. For detailed descriptions, refer to the foregoing descriptions. Details are not described herein again. g() is an inverse normalization function. Optionally, g() may be the adjustment parameter in the tone mapping information in the metadata, or may be preset. This is not specifically limited in embodiments of this application. Optionally, A, B, C, and the like are preset constants, or are included in the tone mapping information in the metadata.

Manner 4:

recHDR[i] = A*g(baseAfter1[i] + f1(enhanceAfter1[i])) + B*g(baseAfter2[i]) + C*g(baseAfter3[i])...

f1() is a transform function. The function may be included in the tone mapping information in the metadata, or may be preset (that is, agreed on in advance). f() is used to perform numerical domain transform on the enhancement image and/or the base image. For detailed descriptions, refer to the foregoing descriptions. Details are not described herein again. g() is an inverse normalization function. Optionally, g() may be the adjustment parameter in the tone mapping information in the metadata, or may be preset. This is not specifically limited in embodiments of this application. Optionally, A, B, C, and the like are preset constants, or are included in the tone mapping information in the metadata.
For example, this manner may be used to process a scene in which a bitstream includes one enhancement image and a plurality of base images.
Manner 5:

recHDR[i] = A*baseAfter1[i] + A1*f1(enhanceAfter1[i]) + baseAfter1[i] + B*baseAfter2[i] + B1*f1(enhanceAfter2[i]) + C*baseAfter3[i] + C1*f1(enhanceAfter3[i])...

f1(), f2(), and f3() are transform functions. The functions may be included in the tone mapping information in the metadata, or may be preset (that is, agreed on in advance). f() is used to perform numerical domain transform on the enhancement image and/or the base image. For detailed descriptions, refer to the foregoing descriptions. Details are not described herein again. g() is an inverse normalization function. Optionally, g() may be the adjustment parameter in the tone mapping information in the metadata, or may be preset. This is not specifically limited in embodiments of this application. Optionally, A, B, C, and the like are preset constants, or are included in the tone mapping information in the metadata.
It should be noted that baseAfter[i] and enhanceAfter[i] are not limited to any domain in this embodiment of this application, and may be a linear domain, a PQ domain, a LOG domain, or the like. This embodiment of this application does not limit color space of baseAfter[i] and color space of enhanceAfter[i], where the color space may be YUV, RGB, Lab, HSV, or the like.
Further, it should be noted that after the composite image is obtained, other image processing may be further performed on the composite image. This is not specifically limited in embodiments of this application.
S804: The enhancement image generation module outputs the composite image to an image processing module.
For example, the enhancement image generation module outputs the composite image to the image processing module.
S805: The image processing module obtains first display information of the electronic device.
For example, the display information of the electronic device includes but is not limited to display information of a display screen and display environment information. In this embodiment of this application, the electronic device may obtain the display information of the display screen and the display environment information.
Optionally, the display information of the display screen includes but is not limited to at least one of the following: peak luminance, and/or minimum luminance, a size, and the like.
Optionally, the display environment information includes but is not limited to luminance of an environment, a color temperature of the environment, and the like.
It should be noted that in this application, whether the display information obtained by the display screen is updated in real time or is a preset value before delivery is not limited. This application does not limit a type of the display information, and the display information may also include a parameter related to display, for example, ambient light.
For other descriptions, refer to the foregoing descriptions. Details are not described herein again.
S806: The image processing module determines first tone mapping information based on the metadata and the first display information.
For a specific processing manner, refer to FIG. 7. Details are not described herein again.
S807: The image processing module performs tone mapping on the composite image based on the first tone mapping information, to obtain a first target image.
The image processing module performs tone mapping on the composite image based on an adjusted tone mapping curve, to obtain the first target image. For example, tone mapping may include the following processes:

(1) Obtain a gain table lut based on the adjusted tone mapping curve.
(2) Obtain a luminance value lum of each pixel (R, G, B), and obtain a gain coefficient ratio from the gain look-up table lut. For example,

$$Lum = max(R,G,B),$$

or Lum = a*R + b*G + c*B, where a, b, and c are weighting coefficients; and

$$ratio = lut[Lum]$$

It should be noted that a manner of calculating lum is not limited in this embodiment of this application, and may be a manner in which luminance is calculated based on L in Lab, I in ICtCp, or the like.

(3) Adjust luminance of each pixel (R, G, B). For example,

$$RTM = R*Ratio, GTM = G*Ratio,$$

and BTM = B*Ratio; or

$$[Y U V] = M*[R G B], YTM = Y*ratio,$$

and [R G B] = M - 1*[Y U V], where M is selected based on BT.2020 or BT.709.

(4) Adjust saturation of each pixel (R, G, B). For example,

ratioc for color adjustment is obtained based on Lum and ratio, where ratioc = (ratio) N or the like.

$$[Y U V] = M*[R G B], UTM = U*ratioc,$$

and VTM = V*ratioc, where M is selected based on BT.2020 or BT.709.

It should be noted that a saturation (color) adjustment algorithm is not limited in this embodiment of this application, and may be performed in a color gamut like RGB, ICtCp, HSV, or Lab.

It should be noted that color gamut mapping may be performed after the foregoing processing, to convert from a current color gamut to a target color gamut. The current color gamut and the target color gamut include but are not limited to BT.2020, BT.709, DCI-P3, sRGB, and the like.

The foregoing tone mapping manners are merely examples for description, and may include more or fewer processing manners. This is not limited in this application.

S808: The image processing module outputs the first target image to a display module.

For example, the image processing module performs a sending for display procedure, that is, outputs the first target image to the display module.

S809: The display module displays the first target image.

For example, the display module receives the first target image, and displays the first target image on the display screen.

Optionally, after the electronic device detects that the display information changes, the method may further include the following steps. Changing of the display information of the electronic device may be that the electronic device adjusts a display parameter of the electronic device in response to a received user operation, and determines that the display information changes. Optionally, if the environment information changes, the electronic device may also detect, in real time based on a parameter uploaded by a sensor or the like, whether the environment information in the display information changes.

S810: The image processing module obtains second display information of the electronic device.

For example, the electronic device obtains the current second display information, that is, the adjusted display information. The second display information is different from the first display information. A difference between the second display information and the first display information may lie in that the display information of the display screen is different and/or the environment information is different. This is not limited in this application. For another part that is not described, refer to the foregoing descriptions. Details are not described herein again.

S811: The image processing module determines second tone mapping information based on the metadata and the second display information.

S812: The image processing module performs tone mapping on the composite image based on the second tone mapping information, to obtain a second target image.

S813: The image processing module outputs the second target image to the display module.

S814: The display module displays the second target image.

For a part that is not described in the foregoing procedure, refer to the foregoing descriptions. Details are not described herein again.

In conclusion, in embodiments of this application, the base image and the enhancement image are merged after decoding, to obtain a single composite image to adapt to a single buffer. This resolves a problem that a processing method for a single-layer bitstream is not applicable. In an existing operating system like Android, a decoding module (regardless of hardware decoding or software decoding), an enhancement image generation module (invoking a GPU or a software API to perform image processing), an image processing module, and a display module (invoking display hardware) are usually independent of each other, and may even be modules from different vendors. Only one image buffer and additional metadata are usually transferred between the modules. After the double-layer bitstream is decoded, the double-layer bitstream usually includes two image buffers: the base image and the enhancement image. In this application, decoding, processing, and display of the double-layer bitstream are separated from each other. The two images obtained through decoding are merged into one composite image, so that the two image buffers are combined into one buffer. Therefore, from decoding to image obtaining and then to display, API interfaces between existing modules can be reused. During display, tone mapping may be performed based on display-related information transferred in the metadata, to finally obtain correct processing effect. This prevents an application program from being redesigned due to unavailability of original interfaces.

FIG. 10 illustrates a flowchart of another image display method. Refer to FIG. 10. The following steps are specifically included but are not limited thereto.

In this embodiment of this application, after any step before S703 in FIG. 7 is performed, an electronic device may obtain a range of an allowed tone distortion degree of the electronic device.

For example, after an image is processed, adapted, and adjusted, tones of pixels usually change, that is, compared with tones of the pixels before processing, adaptation, and adjustment, tones of some pixels change, and the tone distortion degree reflects a degree of the change. For example, a pixel distortion degree may be represented by a percentage, that is, A/B* 100%, where A is a quantity of pixels whose tones change in the image, and B is a total quantity of pixels in the image.

The range of the allowed tone distortion degree reflects tolerance of a user or a receive end (or a display device) for tone distortion. For example, the tone distortion degree may be a preset range, for example, "0%<X<15%" or "5% <X<15%", where X is the tone distortion degree. The former indicates that the user/terminal device allows a tone distortion degree not greater than 15%, and the latter indicates that the user/terminal device allows a tone distortion degree between 5% and 15%.

In a possible implementation, after obtaining the range of the allowed tone distortion degree, the receive end may determine a display manner of the double-layer image based on the range of allowed tone distortion degree. Optionally, the receive end may set a plurality of preset ranges. In this embodiment of this application, the receive end sets a preset range and a second preset range. Optionally, the first preset range may be "5%<X<15%", and the second preset range may be "0%<X≤5%". The first preset range and the second preset range may be set based on an actual requirement. This is not limited in this application.

For example, if the range of the allowed tone distortion degree is within the first preset range, the processing procedure after S703 in FIG. 7 may continue to be performed.

For another example, if the range of the allowed tone distortion degree is within the second preset range, the processing procedure in FIG. 10 may be performed.

S1001: An enhancement image generation module obtains display information of the electronic device.

For an execution process, refer to the foregoing descriptions. Details are not described herein again.

S1002: The enhancement image generation module performs image processing on an enhancement image based on the display information, to obtain a second enhancement image.

For example, the enhancement image generation module may perform image processing on the enhancement image based on the obtained display information. Optionally, the image processing is increasing/reducing a value of the enhancement image based on the display information. For example, if a luminance value corresponding to an enhancement image is A and a luminance value corresponding to the display information is B, the electronic device may increase or reduce a value of the enhancement image based on a difference (for example, a multiple) between the luminance value A and the luminance value B, to obtain the second enhancement image.

S1003: Obtain a composite image based on a base image and the second enhancement image.

For example, the enhancement image generation module may obtain the composite image based on the base image and the second enhancement image. For specific processing, refer to the foregoing descriptions. Details are not described herein again.

S1004: The enhancement image generation module outputs the composite image to a display module.

S1005: The display module displays the composite image.

In other words, in this example, the composite image is used as a target image and displayed on a display screen.

In the scene shown in FIG. 10, if the electronic device adjusts the display information of the electronic device in response to a received user operation, the enhancement image generation module needs to obtain updated display information; processes the enhancement image based on the new display information, to obtain a third enhancement image; and obtains a new composite image based on the base image and the third enhancement image. The display module displays the new composite image.

An embodiment of this application further provides an image display apparatus 1100. FIG. 11 illustrates an image display apparatus according to an embodiment of this application. The image display apparatus is configured to implement the method in embodiments of this application.

As shown in FIG. 11, the image display apparatus 1100 may include a processor 1101 configured to execute a program or instructions stored in a memory 1102. When the program or the instructions stored in the memory 1102 are executed, the processor 1101 is configured to perform the image display method in the foregoing embodiments.

Optionally, the image processing apparatus 1100 may further include a communication interface 1103. In FIG. 11, the communication interface 1103 is represented by a dashed line, and is optional for the image processing apparatus 1100.

A quantity of processors 1101, a quantity of memories 1102, and a quantity of communication interfaces 1103 do not constitute limitations on this embodiment of this application, and during specific implementation, may be randomly configured based on a service requirement.

Optionally, the memory 1102 is located outside the image processing apparatus 1100.

Optionally, the image display apparatus 1100 includes the memory 1102, the memory 1102 is connected to at least one processor 1101, and the memory 1102 stores the instructions that can be executed by the at least one processor 1101. In FIG. 11, the memory 1102 is represented by a dashed line, and is optional for the image processing apparatus 1100.

The processor 1101 and the memory 1102 may be coupled through an interface circuit, or may be integrated together. This is not limited herein.

A specific connection medium between the processor 1101, the memory 1102, and the communication interface 1103 is not limited in this embodiment of this application. In this embodiment of this application, the processor 1101, the memory 1102, and the communication interface 1103 are connected through a bus 1104 in FIG. 11. The bus is represented by a bold line in FIG. 11. A connection manner between other components is merely an example for description, and is not limited thereto. The bus may be classified into an address bus, a data bus, a control bus, and the like. For ease of representation, only one bold line is used to represent the bus in FIG. 11, but this does not mean that there is only one bus or only one type of bus.

It should be understood that the processor mentioned in this embodiment of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described in this specification aims to include but is not limited to these memories and any memory of another proper type.

An embodiment of this application further provides a computer-readable storage medium, including a program or instructions. When the program or the instructions are run on a computer, the method in FIG. 7, FIG. 8A and FIG. 8B, or FIG. 10 is performed.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-readable storage media (including but not limited to a disk memory, a CD-ROM, and an optical memory) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device are used to provide a step for implementing a specific function in one or more processes in the flowcharts and/or in one or more blocks in the block diagrams.

It is clearly that a person skilled in the art can make various modifications and variations to this application without departing from the spirit and scope of this application. In this case, if the modifications and variations made to this application fall within the scope of the claims of this application and equivalent technologies thereof, this application is intended to cover these modifications and variations.

## Claims

**1.** An image display method, comprising:

obtaining a double-layer bitstream, wherein the double-layer bitstream comprises first encoded data, second encoded data, and metadata, the first encoded data represents a base image, and the second encoded data represents an enhancement image;
obtaining the base image and the enhancement image based on the first encoded data and the second encoded data;
merging the base image and the enhancement image, to obtain a composite image;
performing tone mapping on the composite image based on first tone mapping information, to obtain a first target image, wherein the first tone mapping information is determined based on the metadata and first display information of an electronic device; and
displaying the first target image.

**2.** The method according to claim 1, wherein the display information of the electronic device comprises at least one of the following:
display information of a display screen and display environment information.

**3.** The method according to claim 2, wherein the display information of the display screen comprises at least one of the following:
a luminance range of the display screen and a size of the display screen.

**4.** The method according to claim 2, wherein the display environment information comprises at least one of the following:
luminance of an ambient environment of the electronic device and a color temperature of the ambient environment.

**5.** The method according to claim 1, wherein the metadata comprises at least one piece of tone mapping information and at least one piece of preset display information corresponding to the at least one piece of tone mapping information, and before the performing tone mapping on the composite image based on the first tone mapping information, the method further comprises:

determining, based on the display information of the electronic device, target preset display information that matches the display information of the electronic device; and
adjusting, based on a difference value between the target preset display information and the display information of the electronic device, tone mapping information corresponding to the target preset display information, to obtain the first tone mapping information.

**6.** The method according to claim 1, wherein the metadata comprises at least one piece of tone mapping information and at least one piece of preset display information corresponding to the at least one piece of tone mapping information, and before the performing tone mapping on the composite image based on the first tone mapping information, the method further comprises:
adjusting the at least one piece of tone mapping information based on a difference value between the display information of the electronic device and the at least one piece of preset display information, to obtain the first tone mapping information.

**7.** The method according to any one of claims 1 to 6, wherein the method further comprises:

performing tone mapping on the composite image based on second tone mapping information, to obtain a second target image, wherein the second tone mapping information is determined based on the metadata and second display information of the electronic device; and
displaying the second target image.

**8.** The method according to claim 1, wherein before the merging the base image and the enhancement image, the method further comprises:
determining a range of an allowed tone distortion degree.

**9.** The method according to claim 8, wherein the merging the base image and the enhancement image comprises:
when the range of the allowed tone distortion degree is within a preset range, merging the base image and the enhancement image, to obtain the composite image.

**10.** An image display apparatus, comprising:

an obtaining module, configured to obtain a double-layer bitstream, wherein the double-layer bitstream comprises first encoded data, second encoded data, and metadata, the first encoded data represents a base image, and the second encoded data represents an enhancement image;
a decoding module, configured to obtain the base image and the enhancement image based on the first encoded data and the second encoded data;
a composition module, configured to merge the base image and the enhancement image, to obtain a composite image;
a tone mapping module, configured to perform tone mapping on the composite image based on first tone mapping information, to obtain a first target image, wherein the first tone mapping information is determined based on the metadata and first display information of an electronic device; and
a display module, configured to display the first target image.

**11.** An electronic device, comprising:

one or more processors; and
a memory, configured to store one or more programs, wherein
when the one or more programs are executed by the one or more processors, the one or more processors are enabled to implement the method according to any one of claims 1 to 9.

**12.** A computer-readable storage medium, storing a computer program, wherein when the computer program is executed by a computer or a processor, the computer or the processor is enabled to perform the method according to any one of claims 1 to 9.

**13.** A computer program product, wherein the computer program product comprises computer program code, and when the computer program code is run on a computer, the computer is enabled to perform the method according to any one of claims 1 to 9.

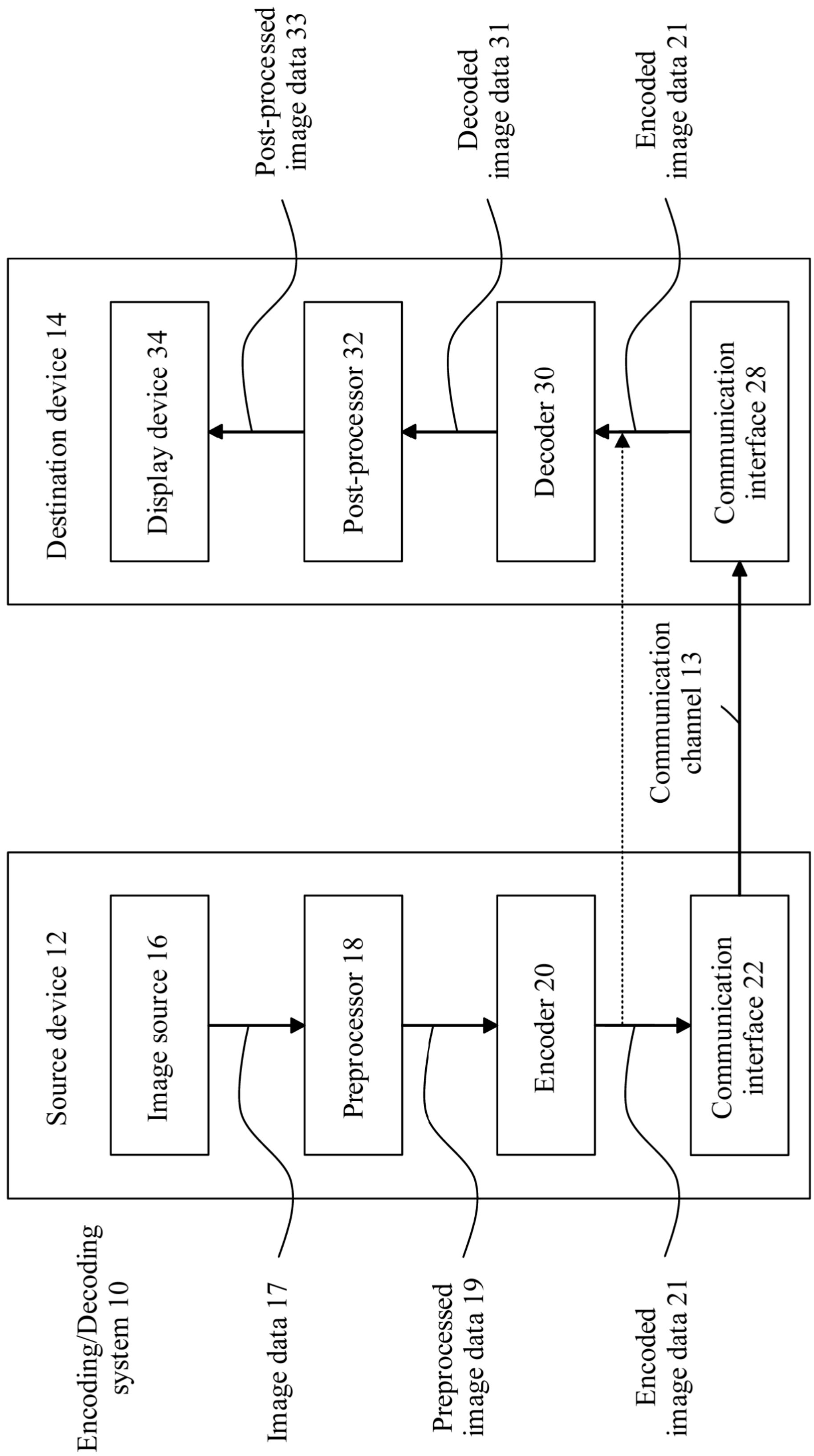
Encoding/Decoding system 10
Source device 12
Image source 16
Preprocessor 18
Encoder 20
Communication interface 22
Image data 17
Preprocessed image data 19
Encoded image data 21
Communication channel 13
Destination device 14
Display device 34
Post-processor 32
Decoder 30
Communication interface 28
Post-processed image data 33
Decoded image data 31
Encoded image data 21

FIG. 1

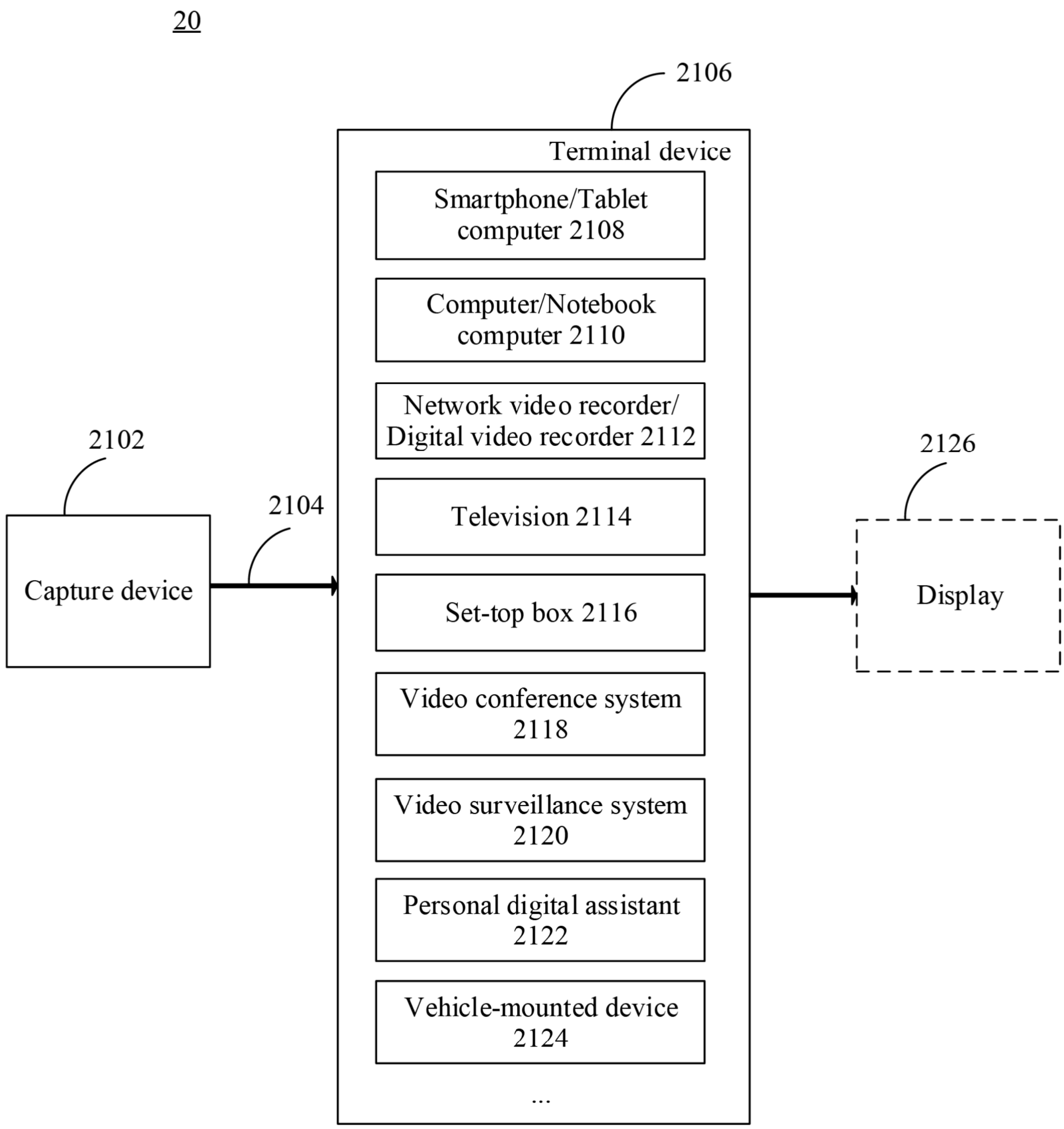
20
2106
Terminal device
Smartphone/Tablet computer 2108
Computer/Notebook computer 2110
Network video recorder/ Digital video recorder 2112
Television 2114
Set-top box 2116
Video conference system 2118
Video surveillance system 2120
Personal digital assistant 2122
Vehicle-mounted device 2124
...
2102
Capture device
2104
2126
Display

FIG. 2A

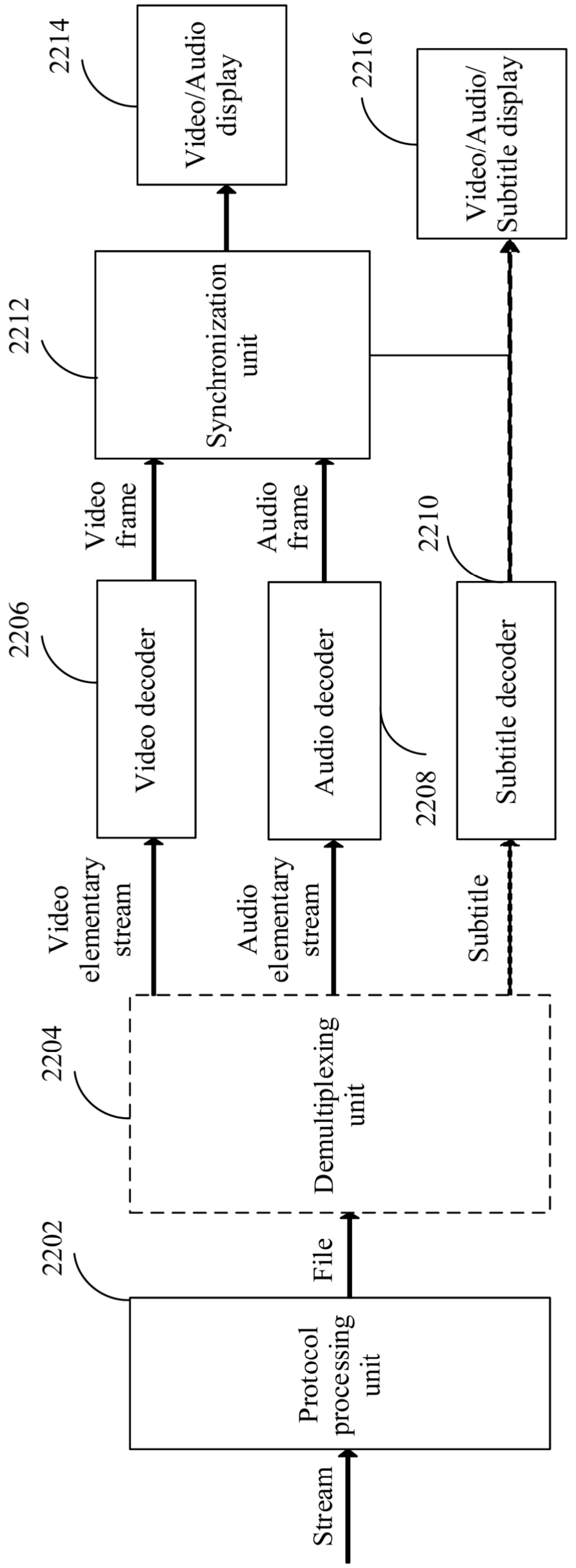
Stream
Protocol processing unit
2202
File
Demultiplexing unit
2204
Video elementary stream
Audio elementary stream
Subtitle
Video decoder
2206
Audio decoder
2208
Subtitle decoder
2210
Video frame
Audio frame
Synchronization unit
2212
Video/Audio display
2214
Video/Audio/ Subtitle display
2216

FIG. 2B

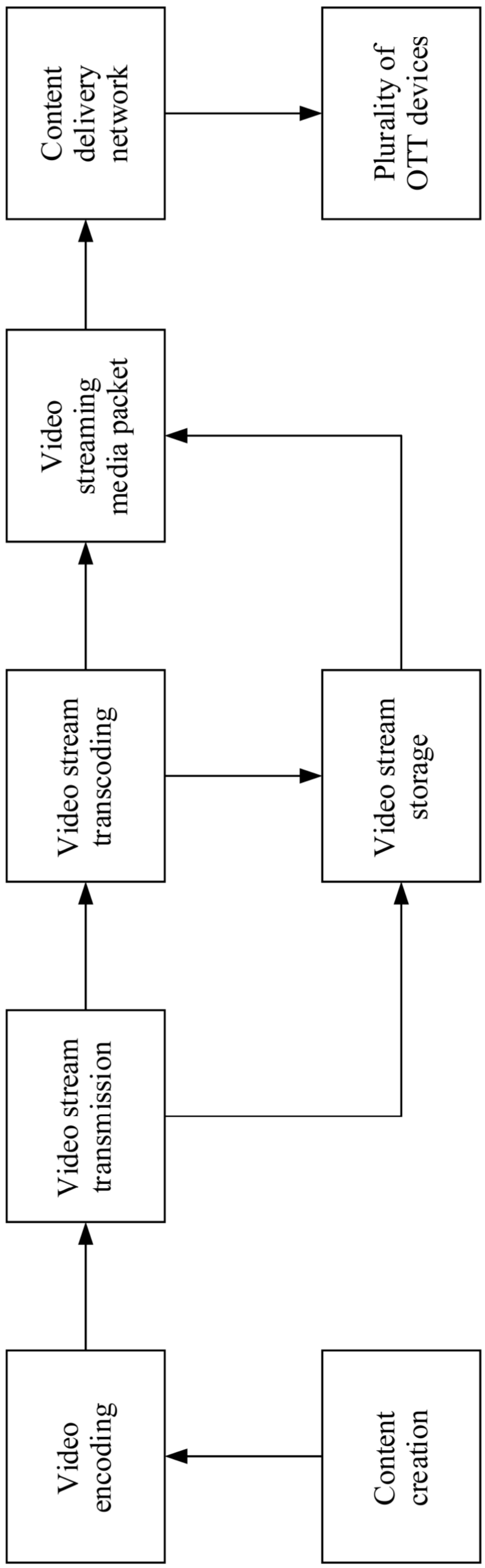
Content creation
Video encoding
Video stream transmission
Video stream transcoding
Video stream storage
Video streaming media packet
Content delivery network
Plurality of OTT devices

FIG. 3A

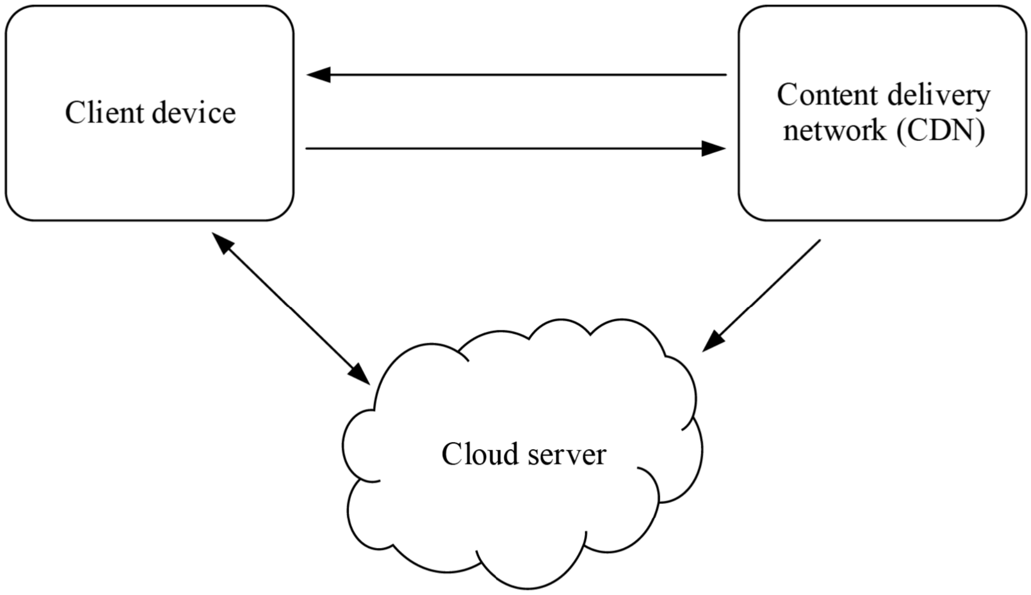
Client device
Content delivery network (CDN)
Cloud server

FIG. 3B

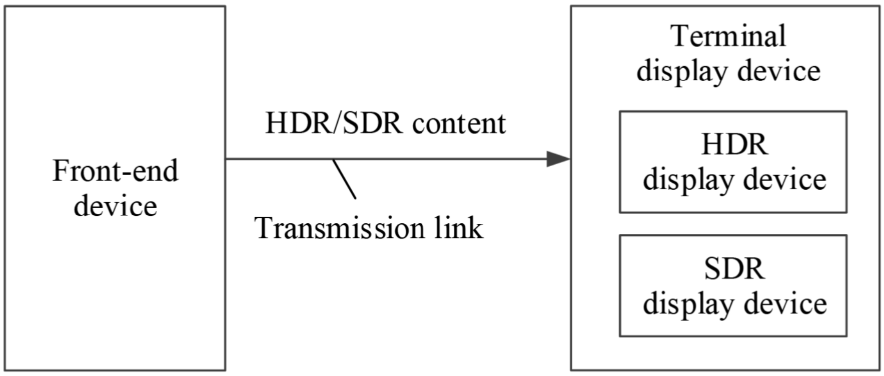
Front-end device
HDR/SDR content
Transmission link
Terminal display device
HDR display device
SDR display device

FIG. 4A

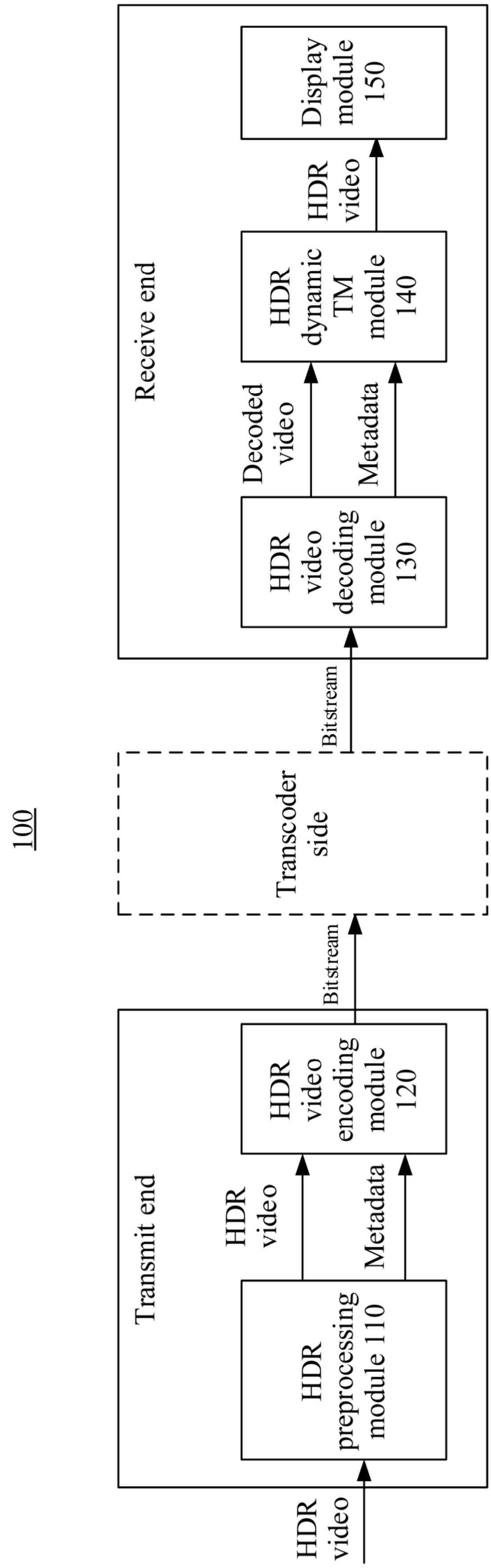
100
HDR video
Transmit end
HDR preprocessing module 110
HDR video
Metadata
HDR video encoding module 120
Bitstream
Transcoder side
Bitstream
Receive end
HDR video decoding module 130
Decoded video
Metadata
HDR dynamic TM module 140
HDR video
Display module 150

FIG. 4B

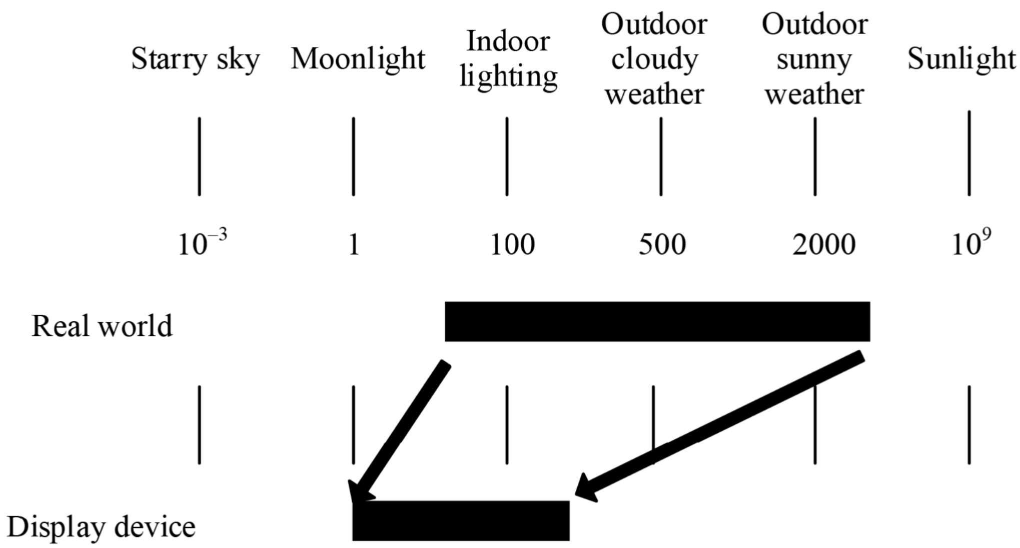
Starry sky
Moonlight
Indoor lighting
Outdoor cloudy weather
Outdoor sunny weather
Sunlight
10^-3
1
100
500
2000
10^9
Real world
Display device

FIG. 5

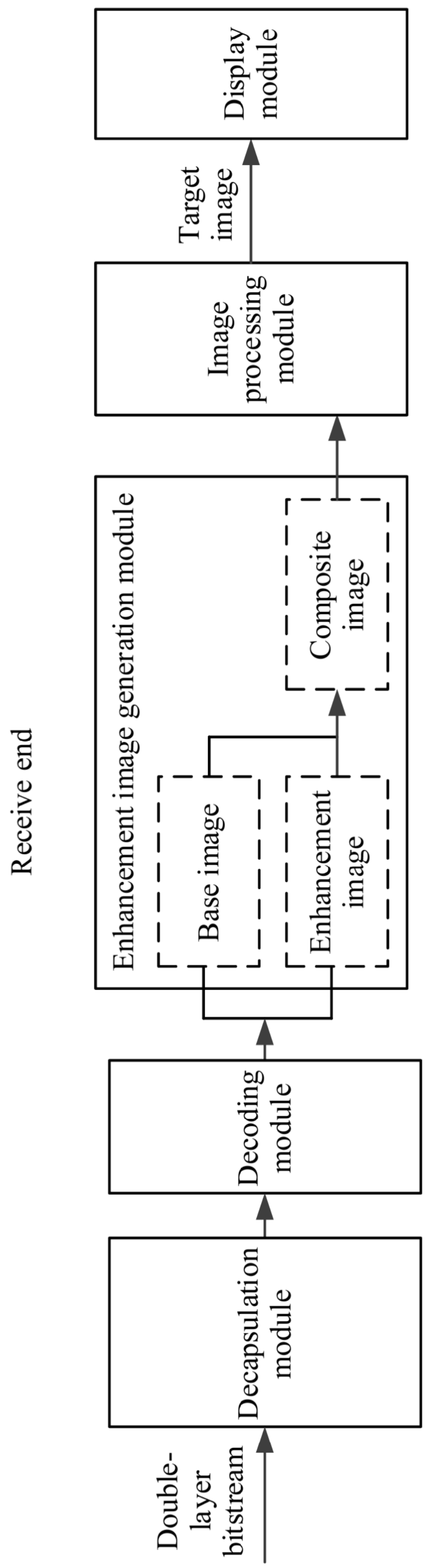
Receive end
Double-layer bitstream
Decapsulation module
Decoding module
Enhancement image generation module
Base image
Enhancement image
Composite image
Image processing module
Target image
Display module

FIG. 6

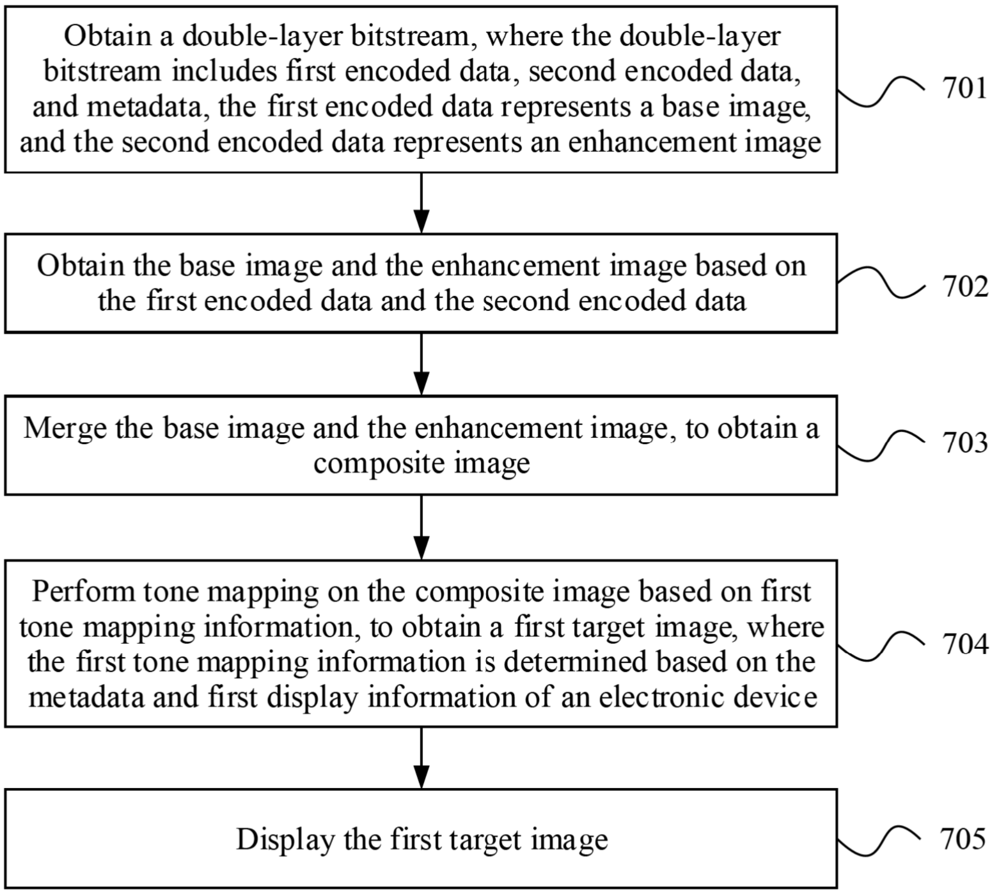
Obtain a double-layer bitstream, where the double-layer bitstream includes first encoded data, second encoded data, and metadata, the first encoded data represents a base image, and the second encoded data represents an enhancement image
701
Obtain the base image and the enhancement image based on the first encoded data and the second encoded data
702
Merge the base image and the enhancement image, to obtain a composite image
703
Perform tone mapping on the composite image based on first tone mapping information, to obtain a first target image, where the first tone mapping information is determined based on the metadata and first display information of an electronic device
704
Display the first target image
705

FIG. 7

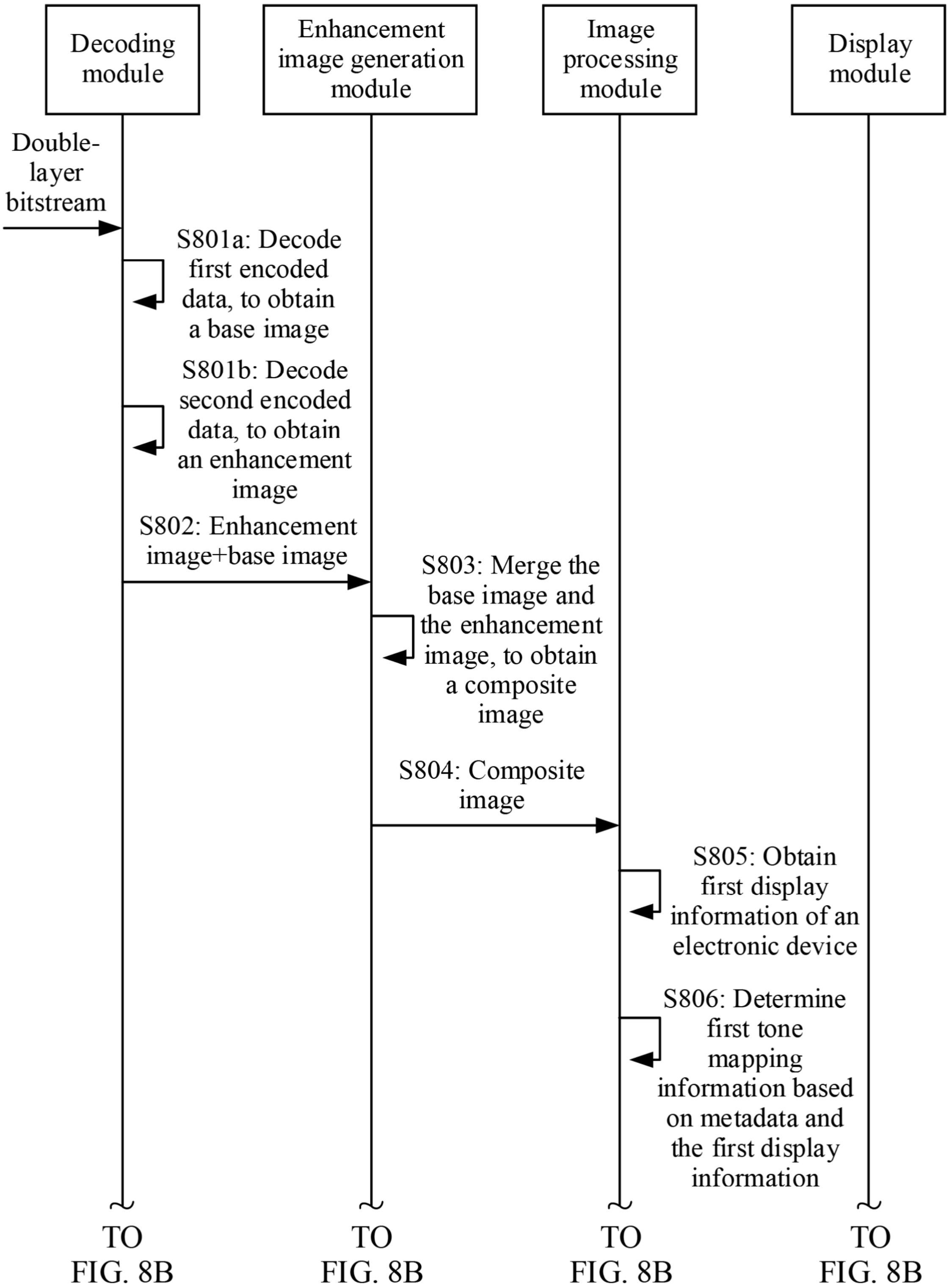
Decoding module
Enhancement image generation module
Image processing module
Display module
Double-layer bitstream
S801a: Decode first encoded data, to obtain a base image
S801b: Decode second encoded data, to obtain an enhancement image
S802: Enhancement image+base image
S803: Merge the base image and the enhancement image, to obtain a composite image
S804: Composite image
S805: Obtain first display information of an electronic device
S806: Determine first tone mapping information based on metadata and the first display information
TO FIG. 8B
TO FIG. 8B
TO FIG. 8B
TO FIG. 8B

FIG. 8A

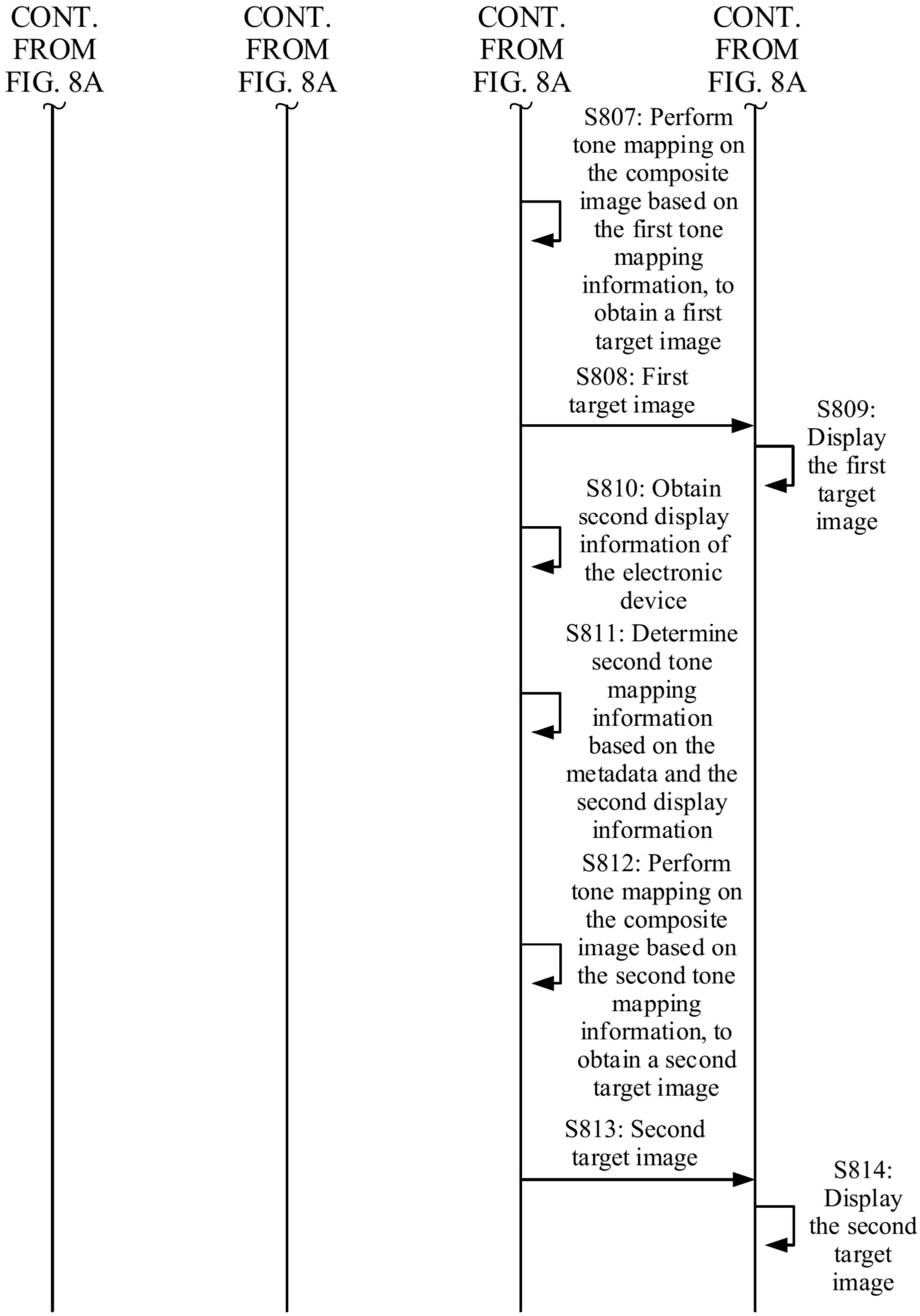
CONT. FROM FIG. 8A
CONT. FROM FIG. 8A
CONT. FROM FIG. 8A
CONT. FROM FIG. 8A
S807: Perform tone mapping on the composite image based on the first tone mapping information, to obtain a first target image
S808: First target image
S809: Display the first target image
S810: Obtain second display information of the electronic device
S811: Determine second tone mapping information based on the metadata and the second display information
S812: Perform tone mapping on the composite image based on the second tone mapping information, to obtain a second target image
S813: Second target image
S814: Display the second target image

FIG. 8B

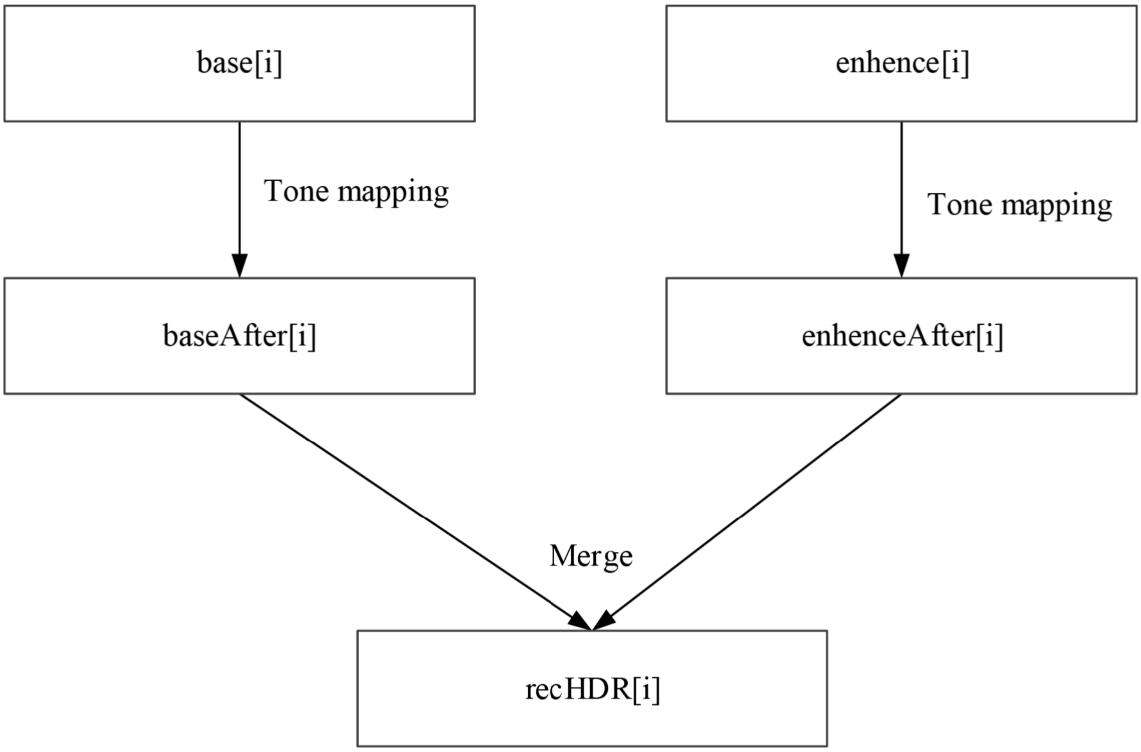
base[i]
enhence[i]
Tone mapping
Tone mapping
baseAfter[i]
enhenceAfter[i]
Merge
recHDR[i]

FIG. 9

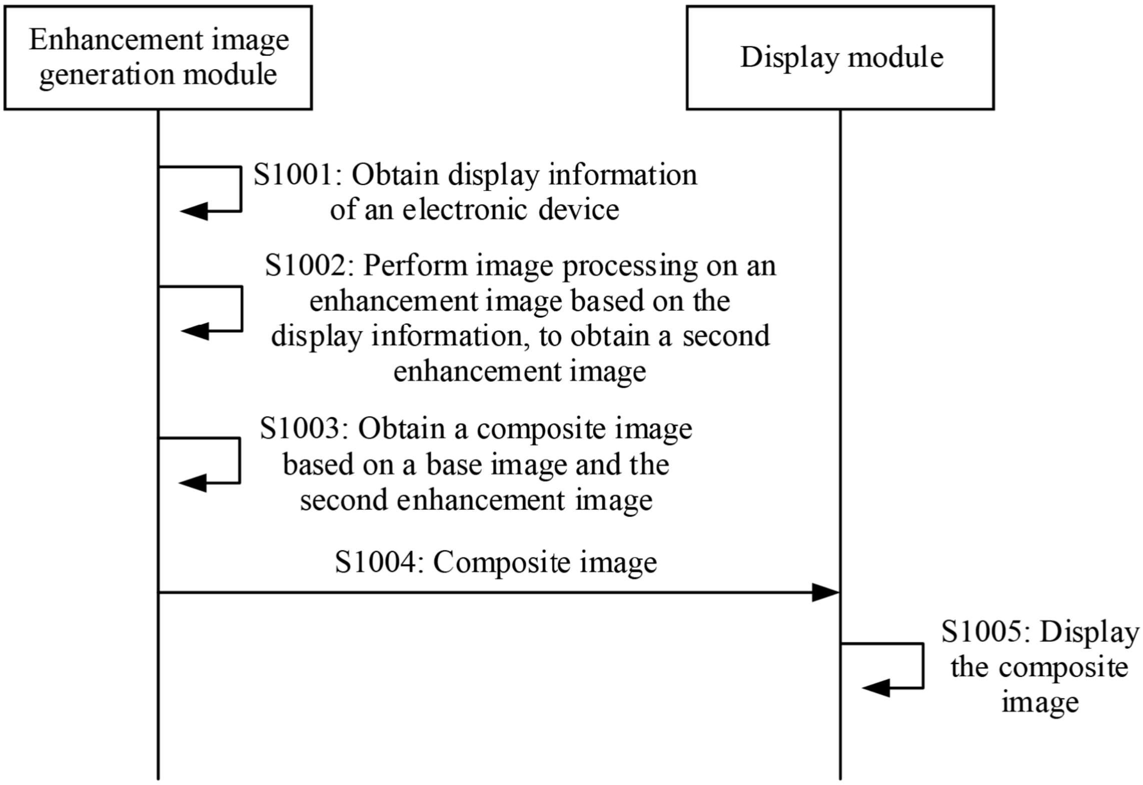
Enhancement image generation module
Display module
S1001: Obtain display information of an electronic device
S1002: Perform image processing on an enhancement image based on the display information, to obtain a second enhancement image
S1003: Obtain a composite image based on a base image and the second enhancement image
S1004: Composite image
S1005: Display the composite image

FIG. 10

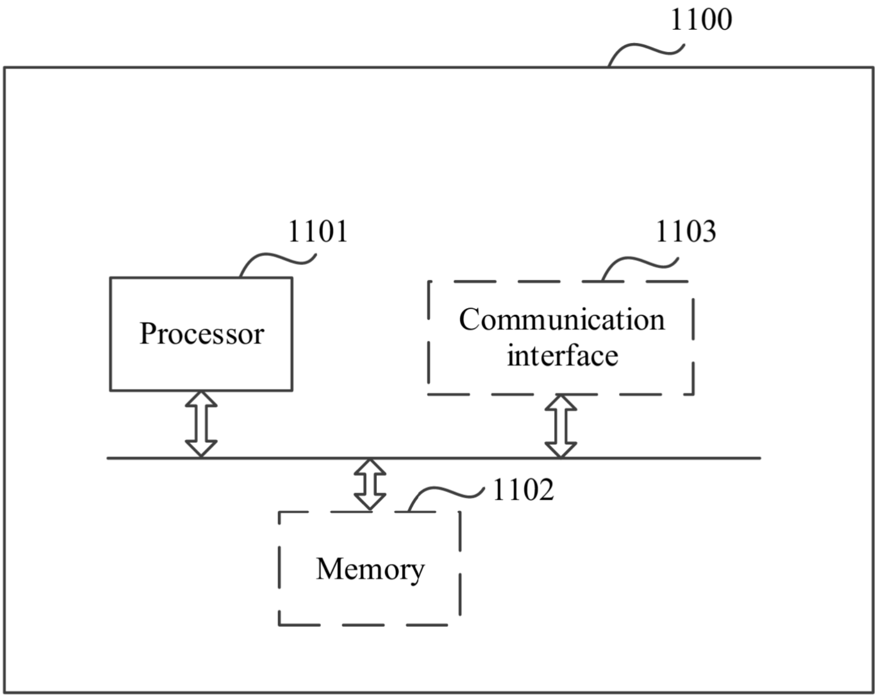
1100
1101
1103
Processor
Communication
interface
1102
Memory

FIG. 11

## INTERNATIONAL SEARCH REPORT

International application No.
**PCT/CN2024/112172**

**A. CLASSIFICATION OF SUBJECT MATTER**

H04N 9/64(2023.01)i； G06T5/00(2024.01)i； H04N11/24(2006.01)i

According to International Patent Classification (IPC) or to both national classification and IPC

**B. FIELDS SEARCHED**

Minimum documentation searched (classification system followed by classification symbols)

IPC:H04N,G06T

Documentation searched other than minimum documentation to the extent that such documents are included in the fields searched

Electronic data base consulted during the international search (name of data base and, where practicable, search terms used)

CNTXT, ENTXTC, ENTXT, WPABS, DWPI, CNKI: 编码, 双层, 基本层, 基础层, 增强层, 合并, 合成, 组合, 色调映射, 元数据, BL, EL, encod+, double-layer, basic layer, enhancement layer, merge, combine, tone mapping, metadata

**C. DOCUMENTS CONSIDERED TO BE RELEVANT**

| Category* | Citation of document, with indication, where appropriate, of the relevant passages | Relevant to claim No. |
|---|---|---|
| Y | US 9538155 B2 (DOLBY LABORATORIES LICENSING CORP.) 03 January 2017 (2017-01-03)<br>description, columns 4-9 | 1-13 |
| Y | CN 114648447 A (HUAWEI TECHNOLOGIES CO., LTD.) 21 June 2022 (2022-06-21)<br>description, paragraphs 0126-0131 | 1-13 |
| A | CN 103491377 A (SONY CORP. et al.) 01 January 2014 (2014-01-01)<br>entire document | 1-13 |
| A | CN 107995497 A (DOLBY LABORATORIES LICENSING CORP.) 04 May 2018 (2018-05-04)<br>entire document | 1-13 |
| A | US 2016295220 A1 (LG ELECTRONICS INC.) 06 October 2016 (2016-10-06)<br>entire document | 1-13 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 October 2024** | **29 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/112172**

| Patent document cited in search report | | | Publication date (day/month/year) | Patent family member(s) | | | Publication date (day/month/year) |
|---|---|---|---|---|---|---|---|
| US | 9538155 | B2 | 03 January 2017 | US | 2015156469 | A1 | 04 June 2015 |
| | | | | TW | 201537970 | A | 01 October 2015 |
| CN | 114648447 | A | 21 June 2022 | WO | 2022127336 | A1 | 23 June 2022 |
| | | | | EP | 4239565 | A1 | 06 September 2023 |
| | | | | US | 2023325987 | A1 | 12 October 2023 |
| | | | | IN | 202327035510 | A | 24 November 2023 |
| CN | 103491377 | A | 01 January 2014 | JP | 2013255179 | A | 19 December 2013 |
| | | | | US | 2013330016 | A1 | 12 December 2013 |
| | | | | US | 2016205417 | A1 | 14 July 2016 |
| CN | 107995497 | A | 04 May 2018 | US | 2018115777 | A1 | 26 April 2018 |
| US | 2016295220 | A1 | 06 October 2016 | EP | 3073742 | A1 | 28 September 2016 |
| | | | | WO | 2015076616 | A1 | 28 May 2015 |
| | | | | KR | 20160086349 | A | 19 July 2016 |
| | | | | JP | 2017500787 | A | 05 January 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311034406